# FASCICULE DE BREVET EUROPEEN

(11) **EP 3 448 647 B1**
(45) Date de publication et mention de la délivrance du brevet: **23.07.2025**
(21) Numéro de dépôt: 17725686.4
(22) Date de dépôt: 28.04.2017
(51) Int. Cl.: B29C 43/22, B29C 41/28, B29C 48/06, B29C 53/00, A44B 18/00

(54) **APPAREILLAGE ET PROCEDE POUR LA FORMATION D'ELEMENTS DE RETENUE PAR FORMAGE**
VORRICHTUNG UND VERFAHREN ZUR HERSTELLUNG VON HALTEELEMENTEN DURCH FORMEN
APPARATUS AND METHOD FOR FORMING RETAINING ELEMENTS BY FORMING

(30) Priorité: 29.04.2016 FR 1653870; 29.04.2016 FR 1653872; 29.04.2016 FR 1653873; 29.04.2016 FR 1653888; 29.04.2016 FR 1653894; 29.04.2016 FR 1653897; 29.04.2016 FR 1653866
(43) Date de publication de la demande: 06.03.2019
(60) Demande divisionnaire: 25182118.7
(73) Titulaire: Aplix, 44850 Le Cellier (FR)
(72) Inventeur: BOSSER, Damien, 44850 Le Cellier (FR); MAHE, Anthony, 44850 Le Cellier (FR)
(74) Mandataire: Cabinet Beau de Loménie
(86) Numéro de dépôt international: PCT/FR2017/051014
(87) Numéro de publication internationale: WO 2017/187101

(56) Documents cités:
- WO-A1-2005/090046
- WO-A1-98/15201
- WO-A2-00/50208
- WO-A2-01/67911
- US-A1- 2010 101 056
- US-A1- 2010 239 699

## Description

### DOMAINE TECHNIQUE GENERAL

Le présent exposé concerne le domaine des systèmes de fermeture, et concerne plus précisément les systèmes de fermeture à crochets ainsi que les procédés et appareillages de fabrication associés.

### ETAT DE L'ART

Les procédés et appareillages conventionnels pour la réalisation de systèmes de fermeture comprenant des éléments auto-agrippant tels que des crochets utilisent de manière conventionnelle des moyens d'extrusion de matière plastique selon un profil continu, puis de découpe de ce dernier et de déformation selon la direction longitudinale afin de former les crochets. On connait ainsi par exemple le document WO 00/50208 qui présente un exemple de dispositif et de procédé pour la formation d'un ruban d'éléments de retenue. Le document US2010/0101056 présente un procédé permettant d'assurer l'obtention d'éléments de retenue ayant une tête plane.

Ces étapes successives impliquent notamment plusieurs étapes de chauffage et de refroidissement au cours du procédé, ce qui conduit à une complexification et à une augmentation conséquente des dimensions de l'appareillage nécessaire à la fabrication.

De plus, chaque étape de refroidissement contribue à augmenter le temps d'occupation du dispositif, ce qui est pénalisant. En outre, la nécessité d'un refroidissement de la matière entre les différentes étapes du procédé et donc entre les différents postes de l'installation entraine un ralentissement de la ligne de production.

Par ailleurs, les postes et étapes de découpe conduisent à une augmentation conséquente des dimensions de l'appareillage, rendant de fait son implantation très complexe.

En outre, les différents procédés de fabrication sont communément limités en termes de forme des éléments de retenue, la forme des éléments de retenue étant par exemple déterminée par des éléments structurels de l'appareillage associé ne pouvant pas être modifiés facilement par l'utilisateur sans nécessiter une modification conséquente de l'appareillage.

Le présent exposé vise ainsi à répondre à ces différentes problématiques.

### PRESENTATION DE L'EXPOSE

Le présent exposé concerne un procédé de formation d'un dispositif de retenue à crochets, dans lequel :
- on fournit une bande de moulage présentant une face interne et une face externe, et comprenant une pluralité de cavités, chaque cavité définissant une tige s'étendant de la face externe vers la face interne, et comprenant une extrémité formant une tête s'étendant à partir de la tige vers la face interne de la bande de moulage,
- on positionne la bande de moulage sur des moyens d'entrainement en rotation comprenant au moins deux rouleaux, la face interne de la bande de moulage étant disposée en appui contre les moyens d'entrainement,
- on distribue un matériau de moulage sur la face externe de la bande de moulage par un moyen de distribution de la matière disposé en regard de la bande de moulage de manière à définir un entrefer entre le moyen de distribution de la matière et la bande de moulage, l'étape de distribution du matériau de moulage étant réalisée de manière à remplir ledit entrefer et les cavités de matériau de moulage afin de former un ruban comprenant une base dont l'épaisseur est définie par l'entrefer, et des premières préformes faisant saillie de ladite base comprenant une tige et une tête, les premières préformes étant formées par la matière plastique dans les cavités de la bande de moulage,
- on démoule le ruban et les premières préformes,
- on introduit le ruban démoulé dans un dispositif de formage de manière à modifier la forme de la tête des préformes par formage.

Selon un exemple, lors de l'étape de démoulage du ruban et des premières préformes, on déforme de manière plastique les premières préformes de manière à obtenir des deuxièmes préformes dont la forme se distingue des premières préformes, lesdites secondes préformes étant ensuite déformées par le dispositif de formage.

Le dispositif de formage comprend au moins deux éléments tournants, lesdits éléments tournants ayant chacun des vitesses distinctes par rapport au ruban.

Selon un exemple, le matériau de moulage est du polypropylène, et dans lequel lors de l'étape de formage, au moins un élément de formage du dispositif de formage est maintenu à une température comprise entre 75 et 165 °C, en particulier avoisinant les 120°C.

Selon un exemple, l'étape de démoulage du ruban et des premières préformes entraine un changement de hauteur de la tête et/ou de la tige, et/ou un changement de largeur de la tête et/ou de la tige.

Selon un exemple, le dispositif de formage comprend un élément à température ambiante ou à une température non régulée, et au moins un élément à une température strictement comprise entre la température de fléchissement sous charge (HDT Heat Deflection Temperature) et la température de fusion du matériau de moulage.

Selon un exemple, l'étape de formage réalise au moins une déformation d'une partie de la tête de chacune des deuxièmes préformes, ladite au moins une déformation tendant pour chaque préforme, à déformer une des extrémités de la tête de la préforme de manière à former une nervure de la face supérieure de la tête de la préforme.

Selon un exemple, l'étape de distribution du matériau de moulage est réalisée de sorte que le matériau de moulage soit distribué lorsque la face interne de la bande de moulage est en appui contre un rouleau entrainant **la** bande de moulage.

Selon un exemple, l'étape de distribution du matériau de moulage est réalisée au travers d'une nappe de non tissé disposée sur la bande de moulage, ladite nappe de non tissé comprenant des zones évidées permettant le passage du matériau de moulage.

Selon un exemple, lors de l'étape de distribution du matériau de moulage, l'entrefer entre le moyen de distribution de matière et la bande de moulage est compris entre 10 micromètres et 700 micromètres, plus particulièrement entre 10 et 500 micromètres, ou plus précisément entre 50 et 100 micromètres.

Le matériau de moulage est alors typiquement du polypropylène, et l'étape de distribution du matériau de moulage est typiquement réalisée à une pression comprise entre 10 et 100 bars, ou encore entre 30 et 50 bars, et à une température comprise entre 150 et 300 °C.

La bande de moulage est alors typiquement entrainée à une vitesse de déplacement comprise entre 1 et 500 m/min, plus particulièrement entre 5 et 250m/min.

Selon un exemple, l'étape de démoulage est réalisée lorsque la base du ruban est à une température inférieure à la température de fusion du matériau de moulage, ou inférieure à la température de fléchissement sous charge du matériau de moulage.

Selon un exemple, l'étape de distribution du matériau de moulage est réalisée de manière à former un ruban s'étendant selon une direction longitudinale comprenant une base présentant deux bords selon la direction longitudinale, l'un des bords présentant des monts et des vallées, dans lequel l'écart maximum entre les monts et les vallées selon une direction transversale à la direction longitudinale est inférieur à 1,0 mm sur une longueur selon la direction longitudinale correspondant à 3 monts consécutifs.

Selon un exemple, préalablement à l'étape de démoulage, on applique une couche de matériau non tissé contre la face inférieure de la base avant solidification de ladite face inférieure de la base, de manière à faire pénétrer au moins partiellement des portions de fibres et/ ou filaments de la couche de matériau non-tissé dans la base.

Selon un exemple, lors de l'étape d'application du non tissé contre la face inférieure de la base, la couche de matériau non tissé est à température ambiante ou à une température non régulée, et la température de la base résulte uniquement de l'étape de formation du ruban.

Selon un exemple, lors de l'étape d'application de la bande de matériau non tissé contre la face inférieure de la base, la face inférieure de la base est à une température inférieure à sa température de fusion.

La présente divulgation concerne également un appareillage pour la mise en œuvre d'un procédé tel que défini précédemment, comprenant :
- un dispositif de moulage, comprenant une bande de moulage montée sur des moyens d'entrainement en rotation comprenant par exemple au moins deux rouleaux), la bande de moulage comprenant une face interne et une face externe, la face interne étant montée en appui contre les moyens d'entrainement en rotation, la bande de moulage comprenant une pluralité de cavités, chaque cavité définissant une tige s'étendant de la face externe vers la face interne, et comprenant une extrémité formant une tête s'étendant à partir de la tige vers la face interne de la bande de moulage,
- un moyen de distribution de matière disposée en regard du dispositif de moulage, configuré de manière à distribuer de la matière de moulage en un point de la bande de moulage, de manière à former un ruban de préformes comprenant une base dont l'épaisseur est définie par l'entrefer, et des premières préformes faisant saillie de ladite base comprenant une tige et une tête,
- des moyens de démoulage, configurés pour démouler un ruban de préformes formées dans la bande de moulage,
- un dispositif de formage, configuré de manière à modifier la tête des préformes par formage.

Selon un exemple, la bande de moulage et les moyens de démoulage sont configurés de manière à ce que le démoulage du ruban de préformes entraine une déformation des premières préformes de manière à former des deuxièmes préformes dont la forme se distingue des premières préformes.

Selon un exemple, l'appareillage comprend en outre des moyens d'entrainement d'une couche de matériau non tissé, adaptés pour appliquer un matériau non tissé contre la face inférieure de la base du ruban d'éléments de retenue en aval du moyen de distribution de matière.

La présente divulgation inclut également un appareillage pour la formation d'un dispositif de retenue à crochets, comprenant :
- un dispositif de moulage, comprenant une bande de moulage montée sur des moyens d'entrainement en rotation comprenant par exemple au moins deux rouleaux, la bande de moulage comprenant une face interne et une face externe, la face interne étant montée en appui contre les moyens d'entrainement en rotation, la bande de moulage comprenant une pluralité de cavités, chaque cavité définissant une tige s'étendant de la face externe vers la face interne, et comprenant une extrémité formant une tête s'étendant à partir de la tige vers la face interne de la bande de moulage,
- un moyen de distribution de matière disposé en regard du dispositif de moulage, configuré de manière à injecter de la matière de moulage en un point de la bande de moulage, de manière à former un ruban de préformes comprenant une base dont l'épaisseur est définie par l'entrefer, et des premières préformes faisant saillie de ladite base comprenant une tige et une tête,
- des moyens de démoulage, configurés pour démouler un ruban de préformes formées dans la bande de moulage,
la bande de moulage et les moyens de démoulage étant configurés de manière à ce que le démoulage de la bande de préforme entraine une déformation des premières préformes de manière à former des deuxièmes préformes dont la forme se distingue des premières préformes.

Selon un exemple, l'appareillage comprend en outre un dispositif de formage, configurés de manière à modifier la tête des préformes par formage.

Selon un exemple, le dispositif de formage comprend au moins deux éléments tournant, l'un desdits éléments tournant comprenant des moyens de chauffage configurés pour le maintenir à une température strictement comprise entre la température de fléchissement sous charge et la température de fusion du matériau de moulage.

Selon un exemple, lesdits éléments tournant du dispositif de formage ont chacun des vitesses distinctes par rapport au dispositif de moulage.

Selon un exemple, les moyens de formage sont configurés de manière à réaliser au moins un pli de la tête des préformes, ledit au moins un pli tendant à plier au moins une extrémité de la tête de la préforme vers une portion centrale de la tête de la préforme.

Selon un exemple, le dispositif de formage comprend un élément tournant configuré de manière à fonctionner à température ambiante ou à une température non régulée, et au moins un élément tournant comprenant des moyens de chauffage adaptés pour que ledit au moins un élément tournant fonctionne à une température strictement comprise entre la température de fléchissement sous charge et la température de fusion du matériau de moulage.

Selon un exemple, les éléments tournant du dispositif de formage sont configurés de manière à être entrainés en rotation à des vitesses de rotation distinctes.

Selon un exemple, les cavités des bandes de moulages s'étendent selon une direction de cavité sensiblement perpendiculaire à **la** surface extérieure de la bande de moulage, et définissent chacune une tige et une tête présentant chacune une symétrie de rotation autour de ladite direction de cavité, la tête ayant une dimension supérieure à la dimension maximale de la tige mesurée radialement par rapport à la direction de cavité.

Selon un exemple, le moyen de distribution de matière est configuré de manière à injecter de la matière de moulage en un point de la bande de moulage lorsque la face interne de la bande de moulage est en appui contre un rouleau des moyens d'entrainement en rotation.

Selon un exemple, l'entrefer entre le moyen de distribution de matière et la bande de moulage est compris entre 10 microns et 700 microns, plus particulièrement entre 20 et 500 microns, ou plus précisément entre 50 et 100 microns.

Selon un exemple, les moyens d'entrainement en rotation de la bande de moulage comprennent au moins deux rouleaux ayant chacun un diamètre compris entre 10 et 10000 fois l'épaisseur de la bande de moulage, en particulier entre 50 et 5000 fois l'épaisseur de la bande de moulage, par exemple entre 100 et 250 mm.

Selon un exemple, l'appareillage comprend en outre des moyens d'application d'une bande de matériau non-tissé sur la bande de moulage en amont des moyens de distribution de matière.

Selon un exemple, les cavités de la bande de moulage sont débouchantes.

Selon un exemple, l'appareillage comprend en outre un dispositif de raclage disposé sur la face interne de la bande de moulage, en aval des moyens de distribution de matière.

Selon un exemple, la bande de moulage comprend une bande interne en caoutchouc formant sa face interne, les extrémités des cavités de la bande de moulage étant formées dans ladite bande interne en caoutchouc.

### PRESENTATION DES FIGURES

D'autres caractéristiques, buts et avantages du présent exposé ressortiront de la description qui suit, qui est purement illustrative et non limitative, et qui doit être lue en regard des dessins annexés, sur lesquels :
- La figure 1 présente schématiquement un exemple d'appareillage pour la réalisation d'un dispositif de retenue à crochets,
- Les figures 2 à 10 présentent des vues détaillées de la forme des éléments de retenue ou préformes obtenus,
- La figure 11 reprend l'appareillage présenté sur la figure 1, et y ajoute des moyens de mise en forme des préformes obtenues,
- Les figures 12A à 12E et 13A à 13J sont des vues détaillées illustrant les étapes de mise en forme des crochets ainsi que les formes des crochets ou préformes obtenues,
- La figure 14 est une vue de dessus du ruban ainsi obtenu illustrant les propriétés des bordures de ce ruban,
- Les figures 15 et 16 représentent un exemple d'appareillage pour l'assemblage d'un substrat à un ruban, par exemple un ruban comprenant un dispositif de retenue à crochets,
- La figure 17 présente schématiquement un exemple de produit obtenu à l'aide d'un tel appareillage, et
- La figure 18 présente schématiquement un autre exemple de produit pouvant être obtenu à l'aide des appareillages présentés précédemment.

Sur l'ensemble des figures, les éléments en commun sont repérés par des références numériques identiques.

### DESCRIPTION DETAILLEE

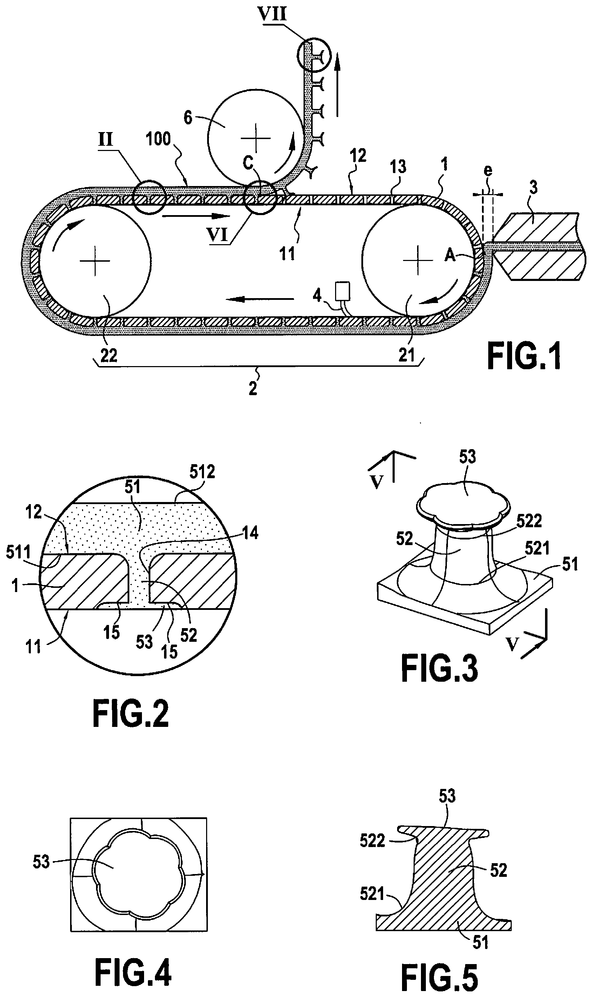

La figure 1 présente schématiquement un exemple d'appareillage pour la réalisation d'un dispositif de retenue à crochets.

L'appareillage tel que représenté comprend une bande de moulage 1 positionnée sur des moyens d'entrainement en rotation 2 comprenant ici deux rouleaux 21 et 22, un moyen de distribution de matière 3 adapté pour réaliser une injection de matière de moulage par exemple plastique et/ou élastique.

L'ensemble formé par la bande de moulage 1 et les moyens d'entrainement en rotation 2 forme ainsi un dispositif de moulage.

L'exemple illustré comprenant deux rouleaux 21 et 22 n'est pas limitatif, le nombre et l'agencement du ou des rouleaux peuvent varier notamment afin de s'adapter à la longueur de la bande de moulage 1 et aux différents postes de l'appareillage. On pourrait par exemple utiliser trois rouleaux ou encore un seul de telle sorte que la bande de moulage est agencée sur la périphérie du seul rouleau. En particulier, un seul des deux rouleaux peut être entrainé en rotation par des moyens motorisés, par exemple le rouleau 21, l'autre rouleau 22 étant libre, c'est à dire sans moyens motorisés, et entrainé en rotation via la bande de moulage, elle-même entrainée par le rouleau 21.

La bande de moulage 1 telle que présentée comprend une face interne 11 et une face externe 12, la face interne 11 étant au contact des moyens d'entrainement en rotation 2.

Le moyen de distribution de matière 3 est disposé de manière à injecter de la matière de moulage sur la face externe 12 de la bande de moulage 1.

Plus précisément, le moyen de distribution de matière 3 est disposé en regard de la bande de moulage 1, espacé de la bande de moulage 1 de manière à définir un entrefer e indiqué sur la figure 1. On repère par la référence A la limite de la matière injectée sur la face externe 12 de la bande de moulage 1, correspondant au front arrière de la matière injectée sur la bande de moulage 1 par rapport au sens de déplacement de la bande de moulage 1.

La bande de moulage 1 est munie d'une pluralité de cavités permettant la réalisation de crochets du dispositif de retenue à crochets.

Les cavités 13 sont chacune formées de manière à définir une tige 14 s'étendant depuis la face externe 12 vers la face interne 11 de la bande de moulage 1 et une tête 15 s'étendant entre la tige 14 et la face interne 11 de la bande de moulage 1. Dans l'exemple illustré, les têtes 15 des cavités 13 débouchent sur la face interne 11 de la bande de moulage 1. Les cavités 13 sont donc traversantes. Un tel mode de réalisation n'est pas limitatif, les cavités 13 peuvent également être borgnes, et donc ne pas déboucher de la face interne 11 de la bande de moulage 1.

Les portions des cavités 13 formant les tiges 14 s'étendent typiquement selon une direction perpendiculaire à la face externe 12 de la bande de moulage 1. Les portions des cavités 13 formant les tiges 14 ont typiquement une géométrie de rotation autour d'un axe perpendiculaire à la face externe 12 de la bande de moulage 1, ou une géométrie présentant un plan de symétrie s'étendant selon une direction parallèle au sens de défilement de la bande de moulage 1 et/ou selon une direction perpendiculaire au sens de défilement de la bande de moulage 1.

Les portions des cavités 13 formant les tiges 14 présentent par exemple une forme généralement tronconique ou cylindrique de rotation autour d'un axe perpendiculaire à la face externe 12 de la bande de moulage 1, et présentant un arrondi au niveau de la jonction avec la face externe 12 de la bande de moulage 1.

Les portions des cavités 13 formant les têtes 15 s'étendent typiquement radialement ou transversalement par rapport à un axe perpendiculaire à la face externe 12 de la bande de moulage 1, et peuvent présenter une symétrie de rotation autour de cet axe perpendiculaire à la face externe 12 de la bande de moulage 1. Les portions des cavités 13 formant les têtes 15 présentent typiquement une forme sensiblement tronconique ou hexaédrique.

Les portions des cavités 13 formant les têtes 15 peuvent être linéaires ou incurvées, par exemple pour former des portions incurvées vers la face interne 11 ou vers la face externe 12 de la bande de moulage 1 s'étendant depuis les portions des cavités 13 formant les tiges 14.

Les portions des cavités 13 formant les têtes 15 peuvent présenter une épaisseur constante ou variable.

Dans l'exemple représenté sur les figures, les portions des cavités 13 formant les têtes 15 s'étendent radialement autour des portions des cavités 13 formant les tiges 14, et présentent une forme générale de disque, comme on le voit notamment sur la figure 2 que l'on présentera par la suite.

La bande de moulage 1 peut présenter sur sa face interne 11 ou sur sa face externe 12 une texturation particulière telle que des rainures, réseau de gorges ou réseau de passage formant évent ou picots, ou être sensiblement lisse.

La bande de moulage 1 peut être formée par une superposition de plusieurs bandes, et n'est donc pas nécessairement monobloc ou monomatière.

Le moyen de distribution de matière 3 est typiquement disposé de manière à réaliser l'injection de matériau de moulage dans la bande de moulage 1 en une section de la bande de moulage 1 où cette dernière est en appui contre un rouleau d'entrainement, en l'occurrence le rouleau d'entrainement 21 dans l'exemple représenté sur la figure 1. Le rouleau d'entrainement forme alors un fond pour les cavités 13.

Dans le cas où l'injection de matériau de moulage est réalisée alors que la bande de moulage 1 n'est pas en appui contre un rouleau d'entrainement, le moyen de distribution de matière 3 peut alors comprendre une base disposée de l'autre côté de la bande de moulage 1, de sorte que la face interne 11 de la bande de moulage 1 soit en appui contre la base lorsque l'injection de matière est réalisée, la base formant alors un fond pour les cavités 13 de la bande de moulage 1.

La bande de moulage 1 présente typiquement une épaisseur comprise entre 5 et 5000 micromètres, ou encore entre 5 et 2000 micromètres, ou plus précisément entre 20 et 800 micromètres, ou encore entre 100 et 500 micromètres.

La bande de moulage peut présenter, dans la direction longitudinale, une longueur comprise entre 0,5 et 5 m.

La bande de moulage peut présenter, dans la direction transversale, une largeur comprise entre 5 et 3 000 mm.

Les rouleaux 21 et 22 présentent typiquement chacun un diamètre compris entre 10 et 10000 fois l'épaisseur de la bande de moulage 1, ou encore entre 50 et 5000 fois l'épaisseur de la bande de moulage 1, plus précisément un diamètre compris entre 50 et 750 millimètres, ou plus particulièrement un diamètre compris entre 100 et 300 millimètres.

L'utilisation d'une bande de moulage 1 associée à des moyens d'entrainement 2 par rapport à l'utilisation de moyens de formation conventionnels tels que des rouleaux dans lesquels sont directement réalisées des cavités de moulage est avantageuse pour plusieurs raisons.

L'utilisation d'une bande de moulage est notamment intéressante en termes de modularité. La bande de moulage peut en effet être retirée et remplacée facilement des moyens d'entrainement, contrairement à un rouleau massif pour lequel les opérations de démontage et remontage sont particulièrement complexes à réaliser. Un tel avantage s'observe particulièrement lorsque les deux rouleaux 21 et 22 sont fixés à un bâti d'un seul et même côté, laissant l'extrémité de l'autre côté libre pour introduire/retirer la bande de moulage. Un moyen de guidage de la bande de moulage peut également être utilisé afin d'en faciliter l'introduction et/ou le retrait.

De plus, la réalisation d'une bande de moulage est fortement simplifiée par rapport à la réalisation d'un rouleau comprenant des cavités de moulage. De tels rouleaux sont en effet typiquement réalisés par empilement de tranches successives, nécessitant donc de multiples opérations d'usinage et entrainant des contraintes importantes lors de l'assemblage et à chaque changement de référence de crochets et présente une masse importante nécessitant le maintien de ces rouleaux par leurs deux extrémités, ce qui complexifie par conséquent leur remplacement. Par ailleurs, l'utilisation d'une bande de moulage couplée à des moyens d'entrainement permet de réaliser un dispositif de moulage ayant une longueur importante tout en conservant une fabrication et une installation simple, notamment quand l'un des rouleaux est monté mobile en translation de manière à modifier l'entraxe entre les rouleaux et ainsi permettre d'ajuster la tension de la bande de moulage. A l'inverse, la réalisation de rouleaux de moulage de diamètre important est particulièrement complexe, et conduit à des moyens de moulage ayant une masse très élevée, ce qui implique donc un surdimensionnement nécessaire pour l'ensemble de l'installation afin de supporter de tels rouleaux. De plus, la réalisation de tels rouleaux de moulage avec un diamètre important ne permet pas d'obtenir des tolérances dimensionnelles acceptables.

On décrit à présent les différentes étapes de formation d'un dispositif de retenue à crochets au moyen de cet appareillage en référence aux figures 1 à 4.

La figure 2 représente la matière de moulage une fois injectée dans la bande de moulage 1. On représente sur la figure 2 une vue de côté (en coupe) de la matière dans les cavités 13 de la bande de moulage 1.

Comme on le voit sur la figure 2, le matériau de moulage pénètre dans la bande de moulage de manière à remplir la cavité 13, formant ainsi une ébauche de tige et de tête pour des crochets.

Une couche de matériau de moulage est également déposée sur la face externe 12 de la bande de moulage 1 de manière à former une base pour le dispositif de retenue, l'épaisseur de cette couche de matériau de moulage étant déterminée par l'entrefer e entre le moyen de distribution de matière 3 et la bande de moulage 1.

L'entrefer e présente typiquement une épaisseur comprise entre 10 et 700 micromètres, ou typiquement entre 10 et 500 micromètres, ou encore entre 20 et 100 micromètres.

Dans l'exemple représenté, les cavités 13 de la bande de moulage 1 sont traversantes. L'appareillage peut alors comprendre un élément tel qu'une racle 4 positionné de manière à racler la face interne 11 de la bande de moulage 1 pour retirer au besoin le matériau de moulage excédentaire. On entend par injection, l'action de mise en forme d'une matière de moulage par voie fondue, par exemple, la distribution, l'apport, le moulage, l'injection, l'extrusion.

L'injection de matière de moulage dans la bande de moulage 1 par le moyen de distribution de matière 3 permet donc de former une base 51 et une pluralité d'éléments ou de préformes comprenant chacun une tige 52 et une tête 53, l'ensemble formant ainsi un ruban 100. Comme on le verra par la suite, les éléments comprenant les tiges 52 et les têtes 53 sont typiquement des premières préformes qui seront ensuite soumises à une étape de formage pour la réalisation des crochets.

On définit une direction longitudinale par rapport à la direction de déplacement du ruban 100, cette direction longitudinale étant parallèle à la direction de déplacement du ruban 100. Cette direction longitudinale est communément désignée par « direction machine » ou « machine direction » ou « MD » selon l'appellation en langue anglaise. On désigne la direction longitudinale par l'axe MD sur les figures.

On définit également une direction transverse, ou « cross direction » ou « CD » selon l'appellation en langue anglaise, correspondant à une direction perpendiculaire à la direction longitudinale, et s'étendant parallèlement à une face plane du ruban 100. On désigne la direction transverse par l'axe CD sur les figures.

La base 51 présente une face supérieure 511 et une face inférieure 512 qui sont typiquement sensiblement parallèles, la face supérieure 511 étant la face munie des crochets et/ou préformes.

La base 51 présente typiquement une épaisseur comprise entre 10 et 700 micromètres, ou typiquement entre 20 et 500 micromètres, ou encore entre 50 et 100 micromètres.

La base 51 présente typiquement une largeur comprise entre 1 et 3 000 millimètres, ou plus précisément entre 2 et 400 millimètres, ou encore entre 3 et 100 millimètres, la largeur de la base 51 étant mesurée selon la direction transversale par rapport à la direction longitudinale, par exemple selon une direction parallèle à la face externe 12 de la bande de moulage 1.

Les figures 3, 4 et 5 illustrent trois vues des préformes de crochets ainsi formées par injection de matière dans la bande de moulage 1, respectivement en vue en perspective, en vue de dessus et en vue en coupe.

On comprend qu'il s'agit ici de représentations de la matière de moulage au sein des cavités 13, représentées chacune isolées de la bande de moulage 1 pour en détailler la forme.

Comme on le voit sur ces figures, les préformes de crochets ainsi formées, ici les premières préformes, présentent une tige 52 de forme générale cylindrique ou conique surmontée d'une tête 53.

On définit une extrémité inférieure 521 de la tige 52 la reliant à la base 51, et une extrémité supérieure 522 de la tige 52 opposée à l'extrémité inférieure 521 de la tige 52.

La tête 53 s'étend depuis l'extrémité supérieure 522 de la tige 52.

Dans l'exemple représenté, la tête 53 a une forme d'hexagone dont les bords forment des arcs de cercle. La tête 53 comprend donc une pluralité de portions s'étendant radialement depuis l'extrémité supérieure 522 de la tige 52. La tête 53, et plus généralement l'ensemble formé par la tête 53 et la tige 52, présente donc une symétrie de rotation autour d'un axe passant par le centre de la tige 52 et de la tête 53. Plusieurs autres formes de tête 53 peuvent être envisagées ; l'exemple illustré a uniquement pour vocation d'illustrer un mode de réalisation. La tête 53 peut notamment présenter une forme hexagonale.

L'appareillage tel que présenté et le procédé associé permettent d'opérer à des vitesses élevées de formation de ruban.

En effet, les lignes de production conventionnelles pour la réalisation de dispositifs de retenue à crochets opèrent à des vitesses de formation réduites, ces faibles vitesses de formation étant compensées via l'élargissement du ruban formé. Cette limitation en terme de vitesse de formation résulte notamment du temps nécessaire à la solidification de la matière injectée.

L'installation et le procédé tels que présentés permettent au contraire de former un ruban avec une vitesse de formation élevée, par exemple supérieure à 20 mètres par minute, ou encore supérieure à 40, 60, 80, 100, 120 ou 150 mètres par minute, ou encore comprise entre 1 et 500 mètres par minute, ou encore entre 5 et 250 mètres par minute. Le procédé présenté ne requiert en effet pas un refroidissement complet de la matière injectée pour la formation des crochets, et de plus, l'utilisation d'une bande de moulage de faible inertie thermique pouvant présenter des cavités traversantes permet d'améliorer considérablement la vitesse de solidification du ruban.

Selon un mode de réalisation, l'injection de matériau de moulage par le moyen de distribution de matière 3 peut être réalisée au travers d'une nappe de matériau non tissé disposée sur la face externe 12 de la bande de moulage 1.

Une nappe de matériau non tissé est alors disposée sur la face externe 12 de la bande de moulage 1 en amont du moyen de distribution de matière 3. Cette nappe de matériau non tissé peut présenter des zones évidées facilitant le passage du matériau de moulage, et également des zones empêchant le passage du matériau de moulage.

Un tel mode de réalisation permet ainsi d'obtenir un ruban présentant une couche de matériau non tissé sur sa face supérieure, c'est-à-dire sur sa face présentant les éléments de retenue, c'est-à-dire les crochets. L'injection du matériau de moulage directement sur la nappe de matériau non tissé permet alors d'assurer une forte cohésion du matériau non tissé avec la base 51.

De plus, en calibrant la répartition de zones évidées facilitant le passage du matériau de moulage et de zones empêchant le passage du matériau de moulage, on peut définir un motif pour la répartition des crochets.

Le substrat dans la zone calibrée présente typiquement une perméabilité à l'air supérieure à 2000 l/m2/sec, plus particulièrement, supérieure à 4000 l/m2/sec dans la zone de passage des crochets. Cette caractéristique de perméabilité est soit intrinsèque au substrat, soit rapportée au substrat par un traitement, un perçage, un poinçonnage, un aiguilletage, une aspiration, un embossage ou autre. Dans un exemple, le substrat peut être un matériau non tissé, par exemple un matériau non tissé imprimé. La perméabilité du substrat est par exemple mesurée selon la NORME ISO 9237 de 1995 avec une pression de 200Pa et des éprouvettes circulaires de 20 cm².

Le grammage de ce matériau non tissé est typiquement compris entre 2 g/m² et 45 g/m². Dans le cas où la perméabilité du matériau non tissé est intrinsèque, la perméabilité peut être inférieure à 15 000 l/m²/sec, ou encore inférieure à 7500 l/m²/sec. Le matériau non tissé utilisé est typiquement un non tissé d'une épaisseur comprise entre 0.10 et 0.8 mm, en particulier entre 0.20 et 0.60 mm. L'épaisseur du matériau non tissé est mesurée par exemple selon la norme NF EN ISO 9073-2 de 1997 en utilisant la méthode A pour les non tissés normaux avec une pression de 0.5kPa et pendant une durée de 10s.

Le matériau non tissé peut également présenter de manière locale une résistance mécanique faible ou de manière intrinsèque une résistance mécanique faible de sorte que le matériau non tissé est perforé par la matière de moulage lors de la réalisation des crochets ou préformes.

Le moyen de distribution de matière 3 peut être adapté pour distribuer de manière simultanée ou successive au moins deux matériaux distincts, permettant ainsi de définir deux zones réalisées en deux matériaux distincts dans le ruban 100.

Plus précisément, le moyen de distribution de matière 3 peut être adapté pour injecter simultanément un matériau de moulage tel que du polypropylène pour la formation de la base 51 et des crochets, et d'un matériau élastique permettant de former un profilé élastique dans le prolongement de la base 51.

La bande de moulage 1 peut alors présenter des formes adaptées pour les différentes zones du ruban 100, par exemple présenter une portion munie de cavités 13 pour la formation de préformes ou de crochets correspondant à la portion où est injecté le matériau de moulage, et une portion ne présentant pas de telles cavités 13 correspondant à la portion où est injecté le matériau élastique.

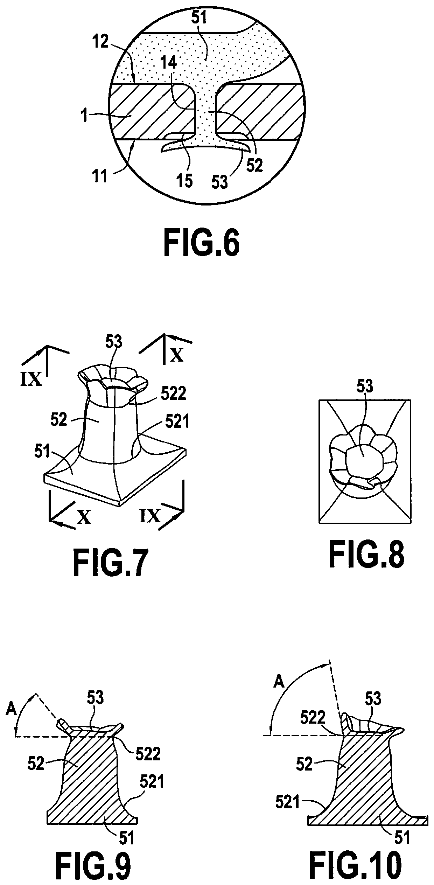

La figure 6 représente schématiquement le démoulage du ruban 100 formé précédemment.

Du fait de la géométrie des cavités, on comprend que les têtes 53 sont nécessairement déformées afin de permettre leur sortie de la bande de moulage 1.

Les portions des cavités 13 formant les tiges 14 et les têtes 15 sont ainsi dimensionnées de manière à permettre un passage des têtes 53 par les portions des cavités 13 formant les tiges 14 afin de réaliser le démoulage.

Le démoulage entraine donc une déformation des têtes 53, que l'on représente schématiquement sur la figure 6. Cette déformation peut être de nature élastique et/ou plastique, et peut donc entrainer une modification des têtes 53 et des tiges 52 en cas de déformation plastique, ou les têtes 53 et tiges 52 peuvent revenir à leur forme initiale après démoulage en cas de déformation élastique.

La nature de la déformation dépend notamment du matériau utilisé, mais également de la géométrie des têtes 53 et des tiges 52.

Pour réduire l'effort exercé sur les préformes lors du démoulage, le démoulage est typiquement réalisé dans une zone dans laquelle la bande de moulage n'est pas en contact avec l'un des rouleaux 21 et 22.

Dans l'exemple représenté sur la figure 6, on schématise une déformation de la tête 53 qui passe d'une forme généralement plane vers une forme de corolle, dont les portions s'étendant radialement ou transversalement depuis l'extrémité supérieure 522 de la tige 52 passent donc d'une configuration sensiblement plane à une configuration inclinée dans une direction opposée à la base 51. Le périmètre de l'extrémité libre de la tête 53 demeure typiquement inchangé.

On représente ensuite sur les figures 7 à 10 une portion de ruban 100 ainsi démoulé.

Dans l'exemple représenté, le démoulage du ruban 100 a entrainé une déformation plastique de la tête 53, dont la géométrie a donc été modifiée par rapport à la forme de la portion de cavité 13 formant la tête 15.

La figure 7 est une vue en perspective d'une portion de ruban 100 ainsi démoulée, la figure 8 est une vue de dessus, et les figures 9 et 10 sont deux vues en coupe selon deux plans perpendiculaires repérés sur la figure 7.

Comme on le voit sur les figures, et en particulier sur les figures 7, 8, 9 et 10, la tête 53 après démoulage a une forme asymétrique ; l'orientation de l'effort lors du démoulage entraine en effet des déformations distinctes sur les différentes portions de la tête 53. Comme représenté sur la figure 10, la portion de la tête 53 positionnée à l'avant (par rapport au sens de défilement de la bande de moulage 1) de la préforme est ici plus relevée que la portion de la tête 53 positionnée à l'arrière (par rapport au sens de défilement de la bande de moulage 1) de la préforme, c'est-à-dire que l'inclinaison de la portion de la tête 53 positionnée à l'avant de la préforme a été modifiée d'un angle supérieur à l'angle dont a été modifiée l'inclinaison de la portion de la tête 53 positionnée à l'arrière de la préforme. Un tel mode de réalisation n'est pas limitatif, la tête 53 peut être réalisée de manière à présenter une forme symétrique après démoulage. Cette déformation de la tête 53 entraine la formation d'une collerette évasée autour d'une portion centrale de la tête 53. Cette collerette présente des variations d'épaisseurs, par exemple une épaisseur qui s'amincit en s'éloignant de la tige 52. Par rapport à la tige 52, l'extrémité distale de la collerette présente une épaisseur inférieure à l'extrémité proximale de la collerette. Ces variations d'épaisseurs rendent l'action mécanique du pliage plus aisée et réduisent l'inertie thermique nécessaire à sa déformation dans une étape ultérieure, par exemple lors du pliage et/ou formage que l'on décrit par la suite.

Plus particulièrement, au moins une portion de la collerette ainsi formée présente en vue de section un angle A d'au moins 15° entre l'axe moyen de la portion considérée de ladite collerette et un plan parallèle à celui de la base 51. Plus particulièrement, cet angle est supérieur à 35°, encore plus particulièrement supérieur à 45°. Sur la figure 9, l'angle A tel que représenté est sensiblement égale à 55° et sur la figure 10, l'angle A est sensiblement égal à 80°.

Du fait de la formation de la collerette, la dimension maximale de la tête de la première préforme mesurée dans un plan parallèle au plan de la base 51 (que l'on qualifie de largeur de la tête) est réduite de 10 % à 150%, ou encore de 25% à 100% par rapport à la largeur de tête de la second préforme et/ou du diamètre de la tige de la deuxième préforme.

La hauteur de la tête de la deuxième préforme est augmentée de 5% à 100%, ou encore de 12% à 50% par rapport à la hauteur de la tête de la première préforme, la hauteur étant mesurée selon un plan perpendiculaire au plan de la base 51. Selon un exemple, la largeur de la tête est diminuée de 0,05mm à 0,2 mm pour un diamètre de la tige de l'ordre de 0,2mm, le diamètre de la tige de la première et deuxième préforme étant sensiblement identique. La hauteur de la tête est augmentée de 0,025mm à 0,1mm pour un diamètre de la tige de l'ordre de 0,2mm, le diamètre de la tige de la première et deuxième préforme étant sensiblement identique.

On considère alors que l'étape d'injection du matériau de moulage dans la bande de moulage 1 forme des premières préformes pour les crochets comprenant chacune une tige 52 et une tête 53 (comme représenté par exemple sur les figures2 à 5), et que ces premières préformes sont ensuite déformées plastiquement lors du démoulage de manière à former des deuxièmes préformes dont la forme se distingue des premières préformes, comme représenté par exemple sur les figures 6 à 10. On entend par déformation plastique, une déformation résiduelle ou rémanente après élongation et relâchement.

Dans l'exemple représenté en figures 1, 11 et 15, le démoulage est réalisé au moyen d'un rouleau de démoulage 6, typiquement configuré de manière à séparer la base 51 du ruban 100 de la bande de moulage 1 sous l'effet de la tension du ruban et de son changement de direction. Le rouleau de démoulage peut être équipé d'un moyen d'aspiration et/ou d'une surface à fort coefficient de frottement, comme par exemple un revêtement en caoutchouc afin d'améliorer l'entraînement et limiter les glissements. Ce rouleau de démoulage peut être motorisé et présenter une vitesse tangentielle légèrement supérieure à celle de la bande. On repère sur les figures par la référence C la séparation entre le ruban 100 et la bande de moulage 1, ce point correspondant par exemple au niveau à partir duquel la base 51 du ruban 100 n'est plus au contact de la bande de moulage 1. On pourra prévoir que la bande de moulage 1 embarre sur le rouleau de démoulage 6, c'est-à-dire que le rouleau de démoulage 6 forme un levier dans la bande de moulage 1 pour faciliter le démoulage des préformes et/ou crochets.

Les premières ou deuxièmes préformes peuvent alors être adaptées pour réaliser une fonction de moyens de retenue, ou à l'inverse ne pas présenter de telles propriétés.

Le démoulage est typiquement réalisé lorsque la base 51 du ruban 100 est à une température inférieure à la température de fusion du matériau de moulage, ou inférieure à la température de fléchissement sous charge du matériau de moulage, par exemple lorsque la face interne 11 de la bande de moulage 1 est à une température de l'ordre de 45°C et la face supérieure 511 de la base 51 est à une température de l'ordre de 75°C. La température de fléchissement sous charge est communément désignée par son appellation en langue anglaise « Heat Deflection Temperature » ou « HDT ».

L'étape de démoulage peut être suivie d'une étape de formage, dans laquelle les deuxièmes préformes sont modifiées notamment au niveau de leur tête 53.

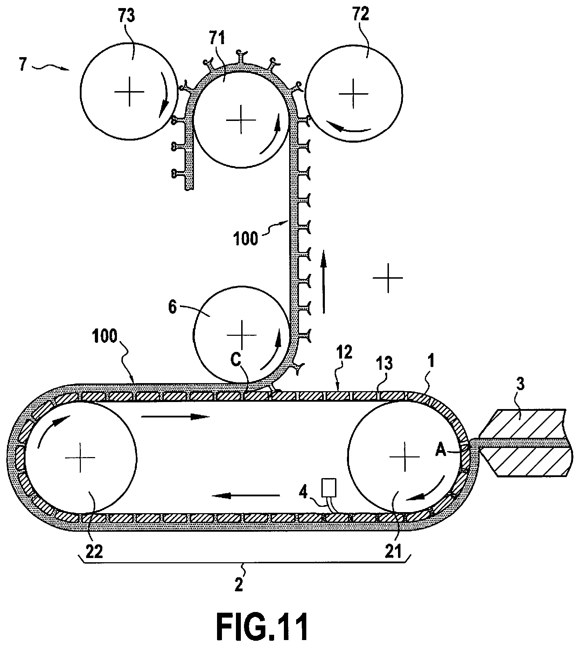

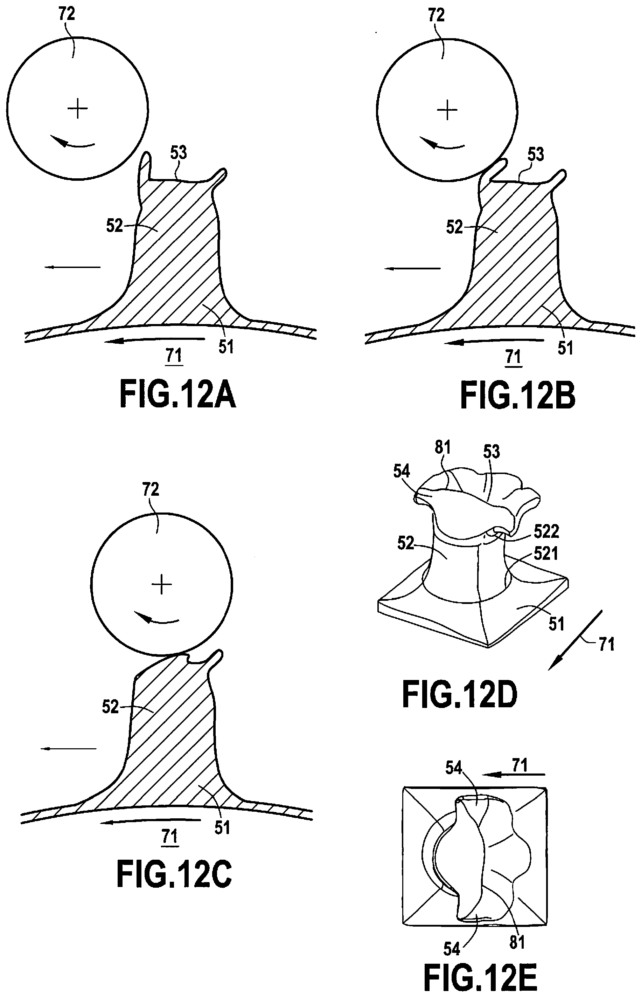

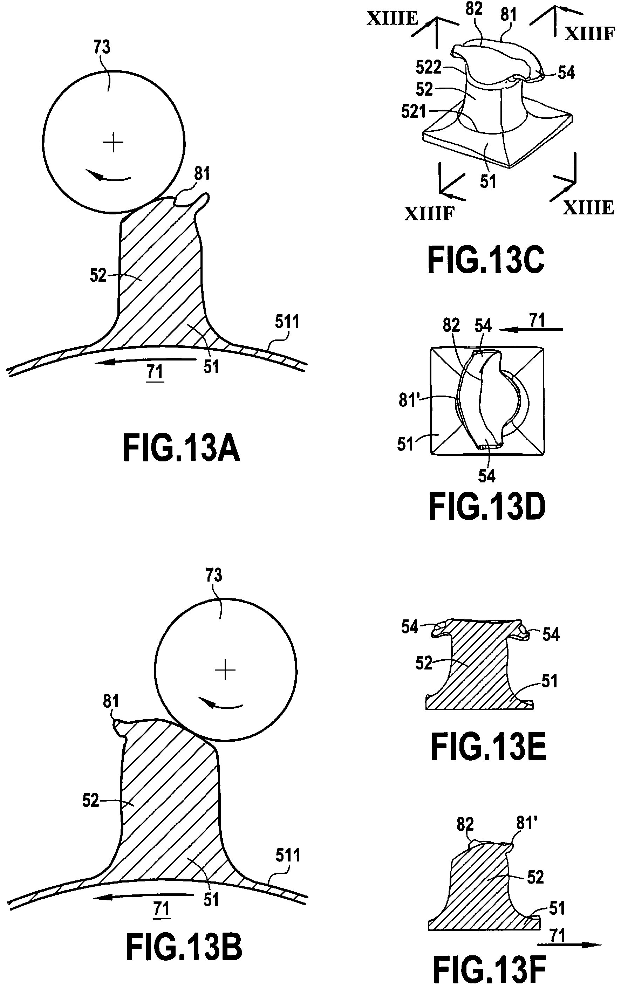

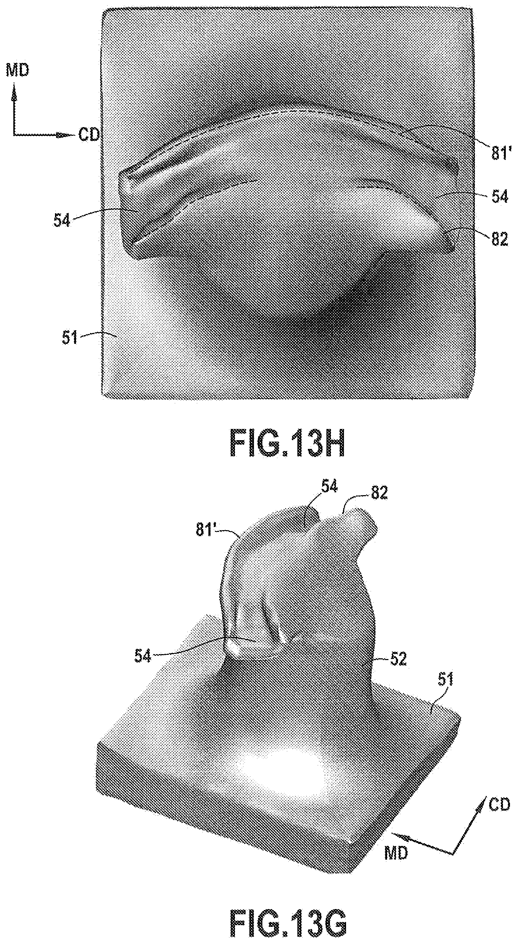

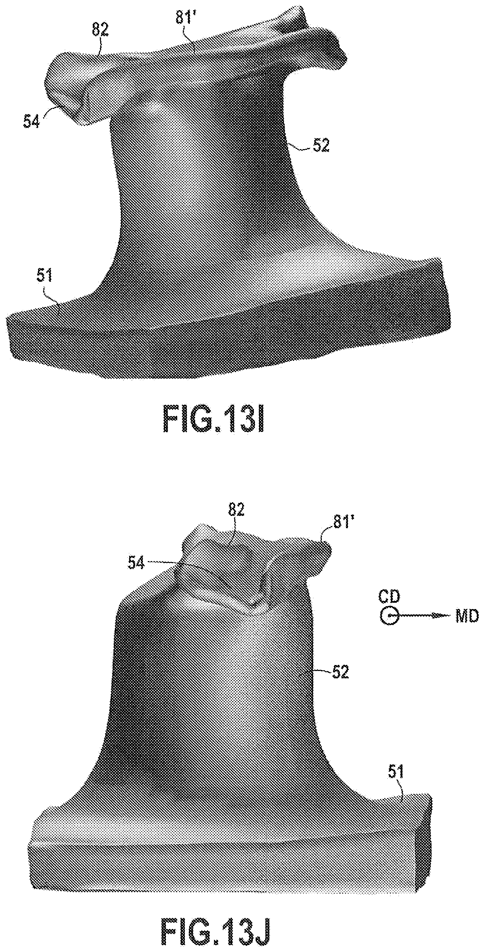

On représente schématiquement sur la figure 11 un appareillage pour la réalisation d'une telle étape de formage, et sur les figures 12 et 13 deux modifications de forme successives pouvant être réalisées lors d'une telle étape de formage.

L'appareillage représenté sur la figure 11 est similaire à celui déjà représenté sur la figure 1, mais comprend également un dispositif de formage 7 positionné en aval du rouleau de démoulage 6.

Le dispositif de formage 7 tel que présenté comprend un rouleau d'entrainement 71 et deux rouleaux de formage 72 et 73.

Le rouleau d'entrainement 71 a pour fonction de guider et d'entrainer le ruban 100. Les rouleaux de formage 72 et 73 ont pour fonction de réaliser une action de formage sur les tiges 52 et/ou les têtes 53 des préformes issues du démoulage.

Dans l'exemple représenté, le dispositif de formage 7 comprend deux rouleaux de formage 72 et 73, permettant de réaliser deux étapes successives de formage que l'on décrit ci-après. Le dispositif de formage 7 n'est pas limité à un tel mode de réalisation, et peut comprendre un nombre variable de rouleaux ou plus généralement de moyens de formage afin de réaliser les étapes de formage souhaitées. A titre d'exemple, le dispositif de formage 7 peut être configuré de manière à ne réaliser qu'une unique déformation, et ne comprendre alors qu'un unique rouleau de formage.

Les rouleaux de formage 72 et 73 sont configurés pour exercer un effort mécanique et/ou thermique sur les têtes 53 ainsi que sur les tiges 52 des préformes, de manière à entrainer une déformation plastique afin de conférer une forme finale aux crochets.

On décrit ci-après un exemple de formage en référence aux figures 12 à 16.

Après démoulage, le ruban 100 est entrainé par le rouleau d'entrainement 71 du dispositif de formage 7. Les rouleaux de formage 72 et 73 sont disposés de manière à définir chacun un passage entre le rouleau de formage considéré et le rouleau d'entrainement 71 permettant le passage du ruban 100.

Ces passages entre le rouleau d'entrainement 71 et les rouleaux de formage 72 et 73 sont dimensionnés de manière à avoir une dimension inférieure à la hauteur du ruban 100, ou le cas échéant à la hauteur du ruban 100 et du substrat, de manière à ce que les rouleaux de formage 72 et 73 exercent un effort sur les préformes.

Dans l'exemple représenté, les deux rouleaux de formage 72 et 73 vont permettre la réalisation de deux étapes successives de déformation des préformes.

Les rouleaux de formage 72 et 73 sont chacun entrainés en rotation à des vitesses de rotation distinctes de celle du rouleau d'entrainement 71, et donc également distincte de la vitesse de défilement du ruban 100.

En considérant la vitesse du rouleau d'entrainement 71 comme vitesse de référence, le premier rouleau de formage 72 possède une vitesse tangentielle inférieure à celle du rouleau d'entrainement 71, par exemple entre 5 et 200% inférieure à celle du rouleau d'entrainement 71, ou encore entre 10 et 80% inférieure à celle du rouleau d'entrainement 71, et le deuxième rouleau de formage 73 possède typiquement une vitesse tangentielle supérieure à celle du rouleau d'entrainement 71, par exemple 5 et 200% supérieure à celle du rouleau d'entrainement 71, ou encore entre 10% et 80% supérieure à celle du rouleau d'entrainement 71.

De plus, les rouleaux de formage 72 et 73 sont chacun typiquement maintenus à une température prédéterminée en fonction du matériau de moulage, par exemple entre 75 et 165 °C ou plus particulièrement sensiblement égale à 120 °C pour un ruban formé en polypropylène, tandis que le rouleau d'entrainement 71 est maintenu à température ambiante ou à une température non régulée ou à une température inférieure à la température de fléchissement sous charge, par exemple inférieure à 65°C.

Ces paramètres de vitesse d'entrainement et de température permettent de causer une adhérence et/ou un frottement et/ou glissement de la tête 53 des préformes sur les rouleaux de formage 72 et 73, provoquant ainsi leur déformation.

Les figures 12a à 12e illustrent ainsi la déformation d'une préforme après action du premier rouleau de formage 72. On illustre schématiquement le sens de rotation du rouleau de formage 72 et le sens de défilement du ruban 100 par des flèches. En amont du rouleau de formage 72, la préforme telle que considérée est celle présentée précédemment en référence aux figures 7 à 10.

On représente sur la figure 12a schématiquement l'approche du ruban par rapport au rouleau de formage 72.

On représente ensuite sur la figure 12b schématiquement l'action de formage du rouleau de formage 72 sur la préforme. Comme on le voit sur cette figure, le rouleau de formage 72 vient écraser et déformer une portion de la tête 53. Plus précisément, le rouleau de formage 72 vient au contact d'une partie des différentes portions de la tête 53 s'étendant depuis l'extrémité supérieure 522 de la tige 52, et les ramène vers la région centrale de la tête 53. Cette déformation de la préforme entraine un ramollissement partiel de la portion ramenée vers la région centrale de la tête 53 avec la matière de la région centrale de la tête 53, et également la formation d'une région inclinée sensiblement plane sur une face de la tête 53.

La figure 12c représente schématiquement la préforme après action du rouleau de formage 72. Les figures 12d et 12e présentent deux autres vues, respectivement en perspective et en vue de dessus d'une telle préforme ainsi déformée.

Comme on le voit sur cette figure, le rouleau de formage 72 a réalisé une déformation sur un front de la préforme, ici l'avant de la préforme par rapport au sens de défilement.

Cette déformation entraine la formation d'une nervure s'étendant selon une direction sensiblement transversale par rapport à la direction longitudinale du ruban 100.

L'action de déformation exercée par le rouleau de formage 72 entraine un retour d'une portion de la tête 53 de la préforme correspondant au front de la préforme selon le sens de défilement, mais cette action de déformation entraine un aplatissement des portions de la tête de la préforme 53 s'étendant dans la direction transverse par rapport à la direction de défilement, formant ainsi des ailettes s'étendant de part et d'autre de la tige 52 selon la direction transverse à la direction de défilement du ruban 100. Ces ailettes définissent des portions d'accrochage 54 de la tête 53, s'étendant radialement au-delà de la tige 52 de la préforme, depuis l'extrémité supérieure 522 de la tige 52.

La déformation réalisée par le rouleau de formage 72 forme une première nervure 81 s'étendant au moins partiellement sur les portions d'accrochages 54.

Plus généralement, la déformation réalisée par le rouleau de formage 72 entraine la formation d'une portion d'accrochage 54 et d'une nervure s'étendant au moins partiellement sur la portion d'accrochage 54. La nervure ainsi formée s'étend sur la face supérieure de la tête 53, réalisant ainsi un renfort mécanique de la tête 53.

Dans le cas où la tête 53 comprend plusieurs portions d'accrochage 54, le formage peut alors entrainer la formation d'une unique nervure s'étendant de manière continue entre les portions d'accrochage 54, ou plusieurs nervures disjointes s'étendant chacune au moins partiellement sur une ou plusieurs des portions d'accrochage 54.

Suite à cette première déformation par le rouleau de formage 72, une seconde déformation peut être réalisée par le rouleau de formage 73.

Les figures 13a à 13j représentent schématiquement la déformation de la préforme par le rouleau de formage 73, et la forme du crochet qui en résulte. On parle en effet désormais de crochet une fois les préformes soumises à ces étapes de formage.

Les figures 13a et 13b représentent la déformation de la préforme par le rouleau de formage 73. Comme on le voit sur ces figures, le rouleau de formage 73 est configuré pour venir au contact d'une portion avant de la préforme par rapport à son sens de déplacement, et déformer la tête 53 de la préforme.

Les paramètres de température et de vitesse de rotation du rouleau de formage 73 provoquent une adhérence de la matière de la tête 53 de la préforme permettant de redresser une partie de la tête 53 faisant saillie de la tige 52.

On remarque notamment que vis-à-vis du ruban 100, le rouleau de formage 73 a un sens de rotation identique par rapport au rouleau de formage 72 décrit précédemment, et possède une vitesse tangentielle supérieure à la vitesse tangentielle du rouleau d'entrainement 71.

Du fait de ces caractéristiques de sens et de vitesse de rotation, le rouleau de formage 73 réalise une déformation de la tête 53 de la préforme de manière à entrainer la matière de la tête 53 vers l'avant de la préforme (par rapport à son sens de déplacement).

De ce fait, le rouleau de formage 72 réalise une première déformation de la préforme tendant à ramener la matière de l'avant de la préforme vers la partie centrale de la tête 53, tandis que le rouleau de formage 73 réalise une seconde déformation de la préforme tendant à ramener la matière vers l'avant de la préforme.

La première nervure 81 formée précédemment est donc ramenée vers l'avant de la préforme, et s'étend au-delà de la tige 52 de la préforme. On repère la première nervure ainsi modifiée par la référence 81' sur les figures. Par soucis de lisibilité, on se réfèrera dans l'ensemble du texte à la première nervure par la référence 81. Une seconde nervure 82 sensiblement transversale est formée, s'étendant également entre deux extrémités transversales du crochet, ici formées par les portions d'accrochage 54.

Comme on le voit sur les figures 13c à 13j, le crochet ainsi formé comprend une première nervure 81 résultant à la fois de l'action du premier rouleau de formage 72 et de l'action du second rouleau de formage 73, et une deuxième nervure 82 résultant de l'action du second rouleau de formage 73.

Ces deux nervures 81 et 82 s'étendent chacune entre deux extrémités opposées du crochet selon la direction transversale, c'est-à-dire entre les deux portions d'accrochage 54 dans l'exemple représenté.

En considérant la direction d'entrainement du ruban dans l'installation, on définit un front avant et un front arrière des crochets. La première nervure 81 s'étend sensiblement selon le front avant des portions d'accrochage 54, tandis que la deuxième nervure 82 s'étend sensiblement selon le front arrière des portions d'accrochage 54. Les portions d'accrochage 54 comprennent ainsi typiquement deux nervures distinctes s'étendant au moins partiellement sur la portion d'accrochage considérée.

Les portions d'accrochage 54 et les première et deuxième nervures 81 et 82 définissent ainsi des extrémités transversales des crochets ayant une forme sensiblement en U avec une base sensiblement plane et dont les deux nervures s'étendent selon une direction sensiblement perpendiculaire.

Les nervures 81 et 82 permettent donc de réaliser un renfort mécanique des portions d'accrochage 54, ces dernières étant configurées de manière à coopérer avec des éléments complémentaires tels que d'autres crochets ou des boucles afin de former un système de retenue. On entend ici par « renfort mécanique », le fait que le crochet est moins apte à se déformer, sous l'action d'une même force, avec une telle nervure ou de telles nervures, qu'un crochet similaire dépourvu d'une telle nervure.

Les portions d'accrochage 54 peuvent s'étendre sensiblement radialement par rapport à la tige 51, ou présenter une extrémité libre inclinée vers la base 51 comme visible par exemple sur les figures 13e, 13i ou 13j, ce qui permet d'améliorer les propriétés de retenue du crochet.

La ou les nervure(s) 81 et 82 s'étendent chacune sur une partie uniquement de la tête 53. Les nervures s'étendent ainsi typiquement sur une partie uniquement de la périphérie de la tête 53. Les nervures présentent typiquement une longueur cumulée comprise entre 5 et 95% de la longueur de la périphérie de la tête 53, ou plus précisément entre 30 et 70% de la longueur de la périphérie de la tête 53. La périphérie de la tête 53 est ici considérée comme étant la périphérie radiale de la tête 53 après l'étape de formage des crochets ou lors de sa formation dans la bande de moulage 1.

Dans cet exemple, au moins une des nervures 81 et 82 présente ici typiquement une longueur supérieure au diamètre de la tige 52, le diamètre étant mesuré selon une direction transverse à la direction longitudinale.

Comme on le voit sur les figures, et plus particulièrement sur les figures 13d et 13h, les nervures 81 et 82 présentent, en vue de dessus du crochet, chacune une forme générale de V inversé (ou en U ou en C) comprenant deux branches formant un angle, cet angle étant typiquement compris entre 90° et 180°, ou plus précisément entre 110° et 170°, ou encore entre 140° et 150°, ou encore sensiblement égal à 145°. Les deux branches de la forme générale en V de la nervure convergent ici vers l'avant du crochet. Ce mode de réalisation est uniquement illustratif, et la forme générale en V peut être inversée de sorte à ce que la nervure converge vers l'arrière du crochet, par exemple en modifiant les paramètres de vitesse du dispositif de formage 7. La pointe de la forme en V inversé, ou le cas échéant le sommet du U ou du C, peut être vers l'avant dans le sens longitudinal.

Les nervures 81 et 82 présentent typiquement une symétrie par rapport à un plan s'étendant selon une direction longitudinale de la base 51, passant par un axe central de la tige 52 des éléments de retenue.

Les crochets ainsi formés ont typiquement une hauteur comprise entre 5 à 5000 micromètres, ou encore entre 5 et 2000 micromètres, ou plus particulièrement entre 20 et 800 micromètres, ou encore plus particulièrement entre 100 et 500 micromètres, la hauteur étant mesurée selon une direction perpendiculaire à la face supérieure 511 de la base 51.

La tête 53 peut être chauffée préalablement à l'étape de formage de sorte à ce qu'elle soit à une température comprise entre la température de fléchissement sous charge du matériau de moulage et la température de fusion du matériau de moulage, le dispositif de formage 7 comprenant un élément tournant à une température, par exemple, inférieure à la température de fléchissement sous charge du matériau de moulage.

Comme on le voit notamment sur les figures 13f, 13g et 13j, le crochet présente une région inclinée sensiblement plane sur la face de la tête agencée à l'arrière du crochet (par rapport au sens de défilement de la bande de moulage 1).

Un autre aspect du dispositif tel que présenté concerne la régularité du ruban ainsi produit.

L'injection de matériau de moulage par le moyen de distribution de matière 3 permet en effet d'obtenir un ruban ayant des bords selon la direction longitudinale sensiblement droits dès la réalisation du ruban, sans nécessiter une étape de découpe additionnelle.

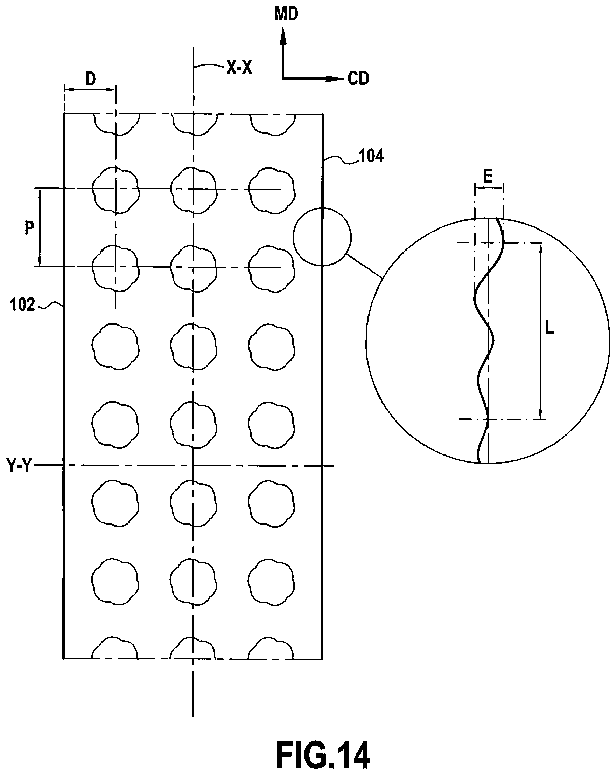

On représente schématiquement sur la figure 14 le ruban 100 tel que décrit précédemment en vue de dessus, lequel ruban comprend une base et ici des préformes ou crochets. Dans l'exemple représenté sur la figure 14, le ruban 100 est représenté muni de préformes telles que déjà décrites notamment en référence aux figures 7 à 10.

Cette figure représente schématiquement le ruban 100 obtenu suite à l'injection de matière dans la bande de moulage 1, ce ruban s'étendant donc selon une direction longitudinale repérée par un axe X-X sur la figure 14. On représente également sur la figure 14 la direction transverse, repérée par un axe Y-Y. La direction longitudinale repérée par l'axe X-X est ici parallèle à la direction machine, c'est-à-dire la direction d'entrainement du ruban 100.

On définit pour ce ruban 100 deux bords 102 et 104 s'étendant chacun selon la direction longitudinale, ces deux bords 102 et 104 définissant les deux extrémités du ruban 100 selon une direction transversale perpendiculaire à la direction longitudinale.

Les crochets ou préformes sont généralement agencé(e)s à proximité des bords 102 et 104. Les crochets ou préformes sont typiquement agencé(e)s à une distance D des bords 102 et 104 comprise entre 2 et 3 pas P de crochets, typiquement égale à 2 ou 3 pas P de crochets, la distance D étant mesurée selon la direction transversale par rapport à la direction longitudinale matérialisée par l'axe X-X sur la figure 14. Le pas P entre deux crochets correspond à la distance entre deux crochets successifs selon la direction longitudinale. Dans l'exemple représenté sur la figure 14, les crochets ou préformes sont agencés en colonnes s'étendant selon la direction longitudinale matérialisée par l'axe X-X, ces colonnes étant répétées à l'identique selon la direction transversale. Les crochets ou préformes peuvent également être agencés en quinconce ou « nid d'abeille », par exemple en décalant les colonnes de crochets ou de préformes selon la direction longitudinale.

Comme représentée sur la figure 14, chacun des bords 102 et 104 présente une succession de monts et de vallées, ladite succession s'étendant selon la direction longitudinale et lesdits monts et vallées s'étendant dans un plan parallèle à celui formé par la base 51, ces monts et vallées traduisant de légères irrégularités dans la distribution de matière de moulage pour la formation du ruban 100, étant entendu qu'un bord parfaitement rectiligne n'est pas réalisable industriellement. Les vallées sont entendues comme étant les régions des bords 102 et 104 faisant saillie vers l'intérieur du ruban 100 tandis que les monts sont entendus comme étant les régions des bords 102 et 104 faisant saillie vers l'extérieur du ruban 100. La régularité des bords 102 et 104 peut donc s'évaluer grâce à ces monts et vallées successifs.

Les bords 102 et 104 présentent, en vue en coupe selon une direction transversale à la direction longitudinale, une portion de forme arrondie. Plus particulièrement, la forme arrondie est orientée à l'extérieur latéral de la base. Cette forme arrondie est réalisée lors de la formation de la base. En d'autres termes, cette forme arrondie n'a pas été obtenue par une découpe.

L'appareillage et le procédé tels que présentés précédemment permettent d'obtenir des bords 102 et 104 du ruban tels que pour une longueur L selon la direction longitudinale correspondant à trois monts consécutifs, l'écart E maximum entre les monts et les vallées selon une direction transversale à la direction longitudinale est inférieur à 3,0 mm, ou plus précisément inférieur à 2,0 mm, ou encore plus précisément inférieur à 1,0 mm, ou encore compris entre 0,001mm et 1,0mm, plus particulièrement entre 0,001mm et 0,5mm, encore plus particulièrement entre 0,001mm et 0,1mm.

Une telle définition est également applicable pour une longueur correspondant à trois vallées consécutives ; l'écart maximum entre les monts et les vallées selon une direction transversale à la direction longitudinale est inférieur à 3,0 mm, ou plus précisément inférieur à 2,0 mm, ou encore plus précisément inférieur à 1,0 mm, ou encore compris entre 0,001mm et 1,0 mm, plus particulièrement entre 0,001mm et 0,5mm, encore plus particulièrement entre 0,001mm et 0,1mm.

Les 3 monts ou vallées consécutifs sont typiquement sur une distance inférieure à la distance correspondant à 15 pas de crochets, de préférence inférieure à une distance de 25 mm.

L'obtention de bords 102 et 104 que l'on peut ainsi qualifier de « droits » est avantageuse en ce qu'elle permet de s'affranchir d'une étape ultérieure de rectification des bords, par exemple via une étape de découpe, de tels bords droits étant perçus par l'utilisateur comme un signe de qualité du produit.

Par ailleurs, l'appareillage et le procédé employés permettent d'obtenir de tels bords droits sans nécessiter la formation de surépaisseurs longitudinale en bordure de ruban, de telles surépaisseurs ne présentant pas d'intérêt fonctionnel. La base 51 du ruban 100 peut ainsi être exempte d'une surépaisseur s'étendant de manière continue le long de ses bords, et présente typiquement une épaisseur sensiblement constante d'un bord à l'autre. Plus généralement, on comprend que la base 51 du ruban peut être exempte d'une surépaisseur non fonctionnelle (dont la seule fonction serait d'améliorer la régularité des bordures du ruban), ce qui est avantageux en termes de production dans la mesure où les surépaisseurs entrainent une surconsommation de matière et augmentent la durée d'occupation des moules.

Comme on le comprend de la description qui précède, les bords droits sont obtenus via l'injection du matériau de moulage par le moyen de distribution de matière 3. Les étapes ultérieures de démoulage et de formage conservent ces bords droits tels que décrits précédemment, dans la mesure où ces étapes n'entrainent pas l'application d'efforts sur les bords de la base 51 du ruban 100. Le ruban 100 ainsi obtenu à l'issue de ces différentes étapes présente donc un bord droit tel que défini précédemment.

Par ailleurs, en cas de distribution de manière simultanée ou successive d'au moins deux matériaux distincts par le moyen de distribution de matière 3, l'interface entre les deux matières est alors typiquement réalisée de manière à présenter une démarcation droite, comme décrit précédemment en référence aux bords de la base 51 du ruban 100. Plus précisément, en cas de distribution de manière simultanée ou successive de deux matériaux, chaque matériau est injecté par le moyen de distribution de matière 3 de manière à former des bords droits aux deux extrémités transversales du ruban de matériau ainsi formé. Par conséquent, la jonction entre les deux matériaux est une jonction entre deux bords droits tels que définis précédemment, et présente donc un profil que l'on qualifie de droit selon la définition établie précédemment. Le moyen de distribution peut, par exemple, comprendre deux buses d'injections ou d'extrusions.

L'appareillage présenté précédemment et le procédé associé peuvent également présenter des moyens et une étape d'association d'un substrat au ruban.

Une telle association d'un substrat sur un ruban comprenant des éléments agrippants est typiquement réalisée au moyen d'un adhésif, ou via une fusion de la base ou du substrat, comme mentionné précédemment.

Afin de réaliser une telle solidarisation d'un substrat à la base du ruban, l'appareillage proposé peut comprendre des moyens d'entrainement de substrat, adaptés pour réaliser une alimentation en substrat et pour appliquer le substrat contre la face inférieure 512 de la base 51 du ruban 100 en aval du moyen de distribution de matière 3.

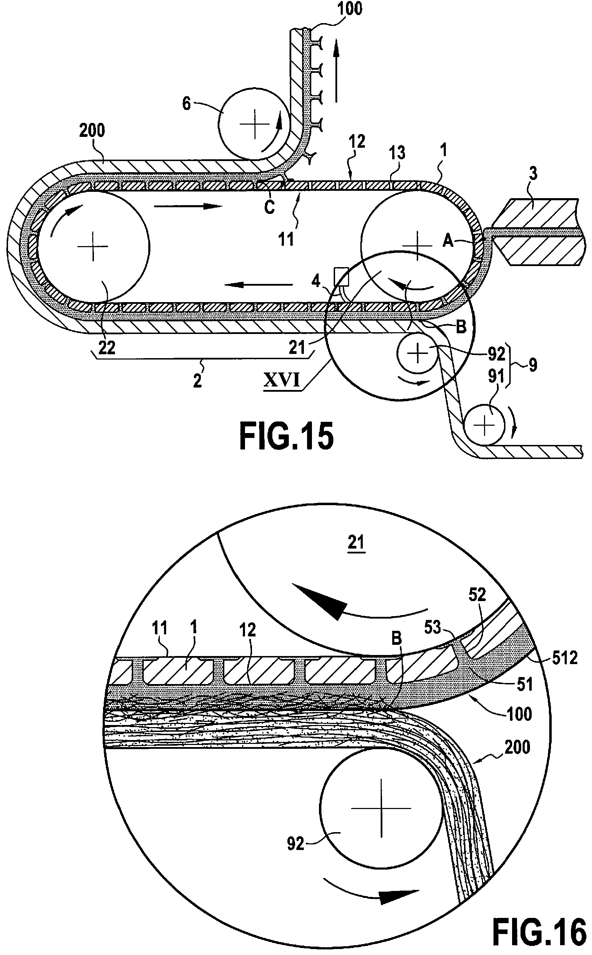

On représente schématiquement sur les figures 15 et 16 un exemple d'appareillage comprenant de tels moyens.

L'appareillage tel qu'illustré est similaire à celui présenté précédemment en référence à la figure 1 ; les éléments en commun ne sont donc pas décrits à nouveau ici.

Comme on le voit sur les figures 15 et 16, l'appareillage tel que présenté comprend des moyens d'entrainement de substrat 9, ici constitués de deux rouleaux 91 et 92, configurés pour réaliser une alimentation en substrat 200 en aval du moyen de distribution de matière 3.

Le substrat 200 est typiquement une couche de matériau non tissé, un film plastique, un film élastique ou un film composite, ou encore un ensemble de fibres et/ou filaments consolidé thermiquement. Le substrat 200 est par exemple une nappe de fibres et/ou filaments.

Dans l'exemple représenté sur les figures 15 et 16, le substrat est représenté comme étant une couche de matériau non tissé.

On entend par non tissé un produit obtenu à l'issue de la formation d'une nappe de fibres et/ou de filaments qui ont été consolidés. La consolidation peut être mécanique, chimique ou thermique et se traduit par la présence de liaison entre les fibres et/ou les filaments. Cette consolidation peut être directe, c'est-à-dire faite directement entre les fibres et/ou filaments par soudure, ou elle peut être indirecte, c'est-à-dire par l'intermédiaire d'une couche intermédiaire entre les fibres et/ou les filaments, par exemple une couche de colle ou une couche de liant. Le terme non-tissé se rapporte à une structure en forme de ruban ou nappe de fibres et/ou filaments qui sont entrelacés d'une manière non uniforme, irrégulière ou au hasard. Un non-tissé peut avoir une structure de couche unique ou une structure à couches multiples. Un non-tissé peut également être réuni à un autre matériau pour former un stratifié. Un non-tissé peut être réalisé à partir de différents matériaux synthétiques et/ou naturels. Les matériaux naturels à titre d'exemple sont des fibres de cellulose, telles que le coton, la jute, le lin et analogue et peuvent également inclure des fibres de cellulose re-traitées, telles que la rayonne ou la viscose. Les fibres naturelles pour un matériau non-tissé peuvent être préparées en utilisant divers procédés tels que le cardage. Des matériaux synthétiques à titre d'exemple comportent, mais sans s'y limiter, des polymères thermoplastiques synthétiques, qui sont connus pour former des fibres qui incluent, sans s'y limiter, les polyoléfines, par exemple le polyéthylène, polypropylène, polybutylène et analogue; le polyamide, par exemple le polyamide 6, polyamide 6.6, polyamide 10, polyamide 12 et analogue; des polyesters, par exemple des polyéthylènes téraphthalates, des polybutylènes téréphtalates, des acides polylactiques et analogues, des polycarbonates, des polystyrènes, des élastomères thermoplastiques, des vinyles polymères, des polyuréthanes et des mélanges et des co-polymères de ces derniers. A titre d'exemple, le non tissé peut être un non tissé du type Spunbond, Spunmelt, cardé thermolié, SMS, SMMS, SS, SSS, SSMMS, SSMMMS, Air through ou autre.

Le substrat n'est pas limité à un non tissé, et peut plus généralement être un non tissé, un matériau tissé, un matériau tricoté, ou une combinaison de plusieurs de ces matériaux.

Les moyens d'entrainement de substrat 9 sont configurés pour alimenter l'appareillage en substrat 200, et appliquer ce substrat 200 contre la face inférieure 512 de la base 51 du ruban 100 en aval du moyen de distribution de matière 3. Les moyens d'entrainement de substrat 9 sont configurés de manière à ce que cette application soit réalisée préalablement à la solidification de la base 51 du ruban 100. Ainsi, cette application entraine une pénétration au moins partielle du substrat 200 au-delà d'un plan défini par la face inférieure 512 de la base 51 du ruban 100. On repère par la référence B sur les figures le point de mise en contact entre la base 51 du ruban 100 et le substrat 200.

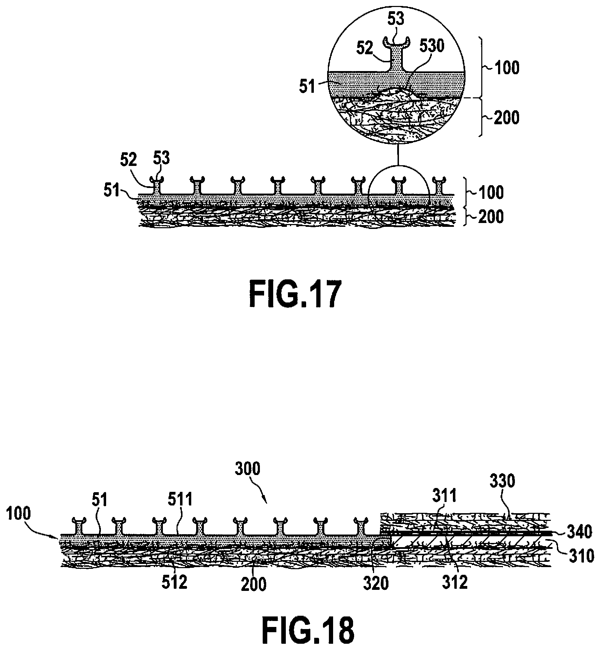

Plus précisément, la face inférieure 512 de la base 51 est sensiblement plane, et définit un plan. L'application du substrat contre cette face entraine une pénétration de portions du substrat 200, par exemple de fibres et/ou filaments de la couche de matériau non-tissé dans le cas où le substrat 200 est une couche de matériau non-tissé au sein de la base 51, traversant de ce fait la face inférieure 512 de la base 51. On représente ainsi schématiquement sur la figure 17 un exemple de produit résultant de cette solidarisation entre le ruban 100 et le substrat 200.

Dans la mesure où une telle application est réalisée préalablement à la solidification de la base 51 du ruban 100, il n'est pas nécessaire de chauffer la base 51 du ruban 100 et/ou le substrat 200 afin de réaliser une telle liaison.

A titre d'exemple, en considérant une base 51 réalisée en polypropylène, l'application du substrat contre la face inférieure 512 de la base 51 est typiquement réalisée lorsque la face inférieure 512 de la base 51 présente une température comprise entre la température de fusion du matériau et la température de ramollissement Vicat B du matériau la constituant moins 30°C ou encore entre la température de fusion du matériau la constituant et la température de ramollissement Vicat A du matériau la constituant. Plus particulièrement, lorsque la base comprend un matériau à base de polypropylène, la face inférieure 512 de la base 51 présente une température comprise entre 75°C et 150°C, typiquement de l'ordre de 105°C, cette température étant typiquement mesurée au moyen d'une caméra infrarouge ou laser. On entend par température de ramollissement VICAT la température obtenue selon l'une des méthodes décrites dans les normes ISO 306 ou ASTM D 1525 avec une vitesse de chauffe de 50°C/h et une charge normalisée de 50N pour le VICAT B et une charge normalisée de 10N pour le VICAT A.

Plus généralement, lors de l'application du substrat 200 contre la face inférieure 512 de la base 51, la face inférieure 512 de la base 51 est à une température inférieure à sa température de fusion, ou plus particulièrement inférieure à la température de fléchissement sous charge du matériau formant la base 51, ou encore sensiblement égale à la température ambiante (ou à une température non régulée), et la température de la base 51 est issue uniquement de l'étape de formation du ruban 100. En considérant les points A, B et C définis précédemment et visibles notamment sur la figure 15, la distance parcourue par la base 51 entre les points A et B est typiquement comprise entre 20,0 mm et 400 mm. De même, la distance parcourue par la base 51 entre les points B et C est typiquement comprise entre 400 mm et 1500 mm. La distance parcourue par la base 51 entre les points B et C est typiquement deux fois supérieure à la distance parcourue par la base 51 entre les points A et B.

Le rouleau 92 est typiquement configuré de manière à appliquer sous pression le substrat 200 contre la face inférieure 512 de la base 51 afin de faciliter la pénétration du substrat 200 dans la base 51.

Le rouleau 92 peut présenter des motifs ou reliefs sur sa surface, de manière à favoriser la pénétration du substrat 200 dans la base 51.

Le substrat 200 peut être appliqué de manière uniforme ou non uniforme contre la face inférieure 512 de la base 51.

La liaison réalisée entre le substrat 200 et la base 51 du ruban 100 peut être réalisée de manière uniforme ou non uniforme.

Dans le cas où le substrat 200 est un ensemble de fibres et/ou filaments consolidés thermiquement, la liaison avec la base 51 est également réalisée par pénétration dans la base d'une partie des fibres et/ou filaments du substrat 200.

Dans le cas où le substrat 200 est un ensemble de fibres et/ou filaments consolidés thermiquement, un film plastique, un film élastique ou un film composite, il peut résulter alors de la liaison avec la base un phénomène de retassure du ruban 100 lors de son refroidissement, cette retassure favorisant la surface de liaison entre le substrat et la base du ruban. Cette retassure est sans impact sur l'aspect visuel pour l'utilisateur final.

Plus précisément, il est bien connu que les pièces moulées présentent un phénomène de retassure ou retrait lors du refroidissement de la matière. Dans le cas présent, le ruban 100 présente des portions d'épaisseurs distinctes du fait de la présence des éléments de retenue s'étendant depuis la face supérieure 511 de la base 51. Ces zones présentant une surépaisseur vont entrainer des phénomènes de retrait de la matière à la verticale des tiges 52 des crochets, formant ainsi des zones de retrait de matière 530 dans la face inférieure 512 de la base 51.

Or, dans la mesure où le substrat 200 est appliqué contre la face inférieure 512 de la base 51 préalablement à la solidification de la base 51, ce retrait de matière s'effectue après application du substrat contre la face inférieure 512 de la base 51. L'application sous pression du substrat 200 contre la face inférieure 512 de la base 51 ainsi que le fait que la base 51 ne soit pas solidifiée lors de cette application entraine une adhésion par inter diffusion moléculaire entre le substrat 200 et contre la face inférieure 512 de la base 51. Ainsi, lors du retrait de la matière de la base 51 lors de sa solidification comme mentionné précédemment, le substrat 200 demeure au contact de la face inférieure 512 de la base 51, et des régions du film formant le substrat 200 épousent donc la forme des zones de retrait de matière dans la face inférieure 512 de la base 51. Ces régions du film formant le substrat 200 pénètrent donc au-delà du plan défini par la face inférieure 512 de la base 51. Ainsi, la surface du film formant le substrat 200 au contact de la face inférieure 512 de la base 51 est supérieure au projeté de la surface du film sur un plan défini par la face inférieure 512 de la base 51, ce qui permet d'augmenter l'adhérence entre le substrat 200 et le ruban 100.

Dans le cas où le substrat 200 est une couche de matériau non tissé, le démoulage des crochets est réalisé de manière aisée même avec un non tissé dont le grammage est inférieur à 80gsm. A titre d'exemple, le grammage du non tissé peut être compris entre 5gsm et 120gsm, ou encore entre 10gsm 70gsm.

Dans le cas où le substrat 200 est une couche de matériau non tissé, l'appareillage peut comprendre un dispositif de calandrage en amont des moyens d'entrainement de substrat 9, permettant ainsi de réaliser une étape de calandrage localement ou non de la couche de matériau non tissé préalablement à son application contre le ruban 100.

Ce mode de solidarisation d'un substrat 200 à un ruban 100 est notamment avantageux en ce qu'il n'entraine pas une déformation du ruban 100, et permet donc avantageusement de conserver la forme de la base 51 obtenue lors de l'étape d'injection, et notamment de conserver les bords droits pouvant être obtenus via le procédé et l'appareillage décrits précédemment.

Ce mode de solidarisation d'un substrat à un ruban peut être appliqué à un procédé de formation d'un ruban tel que décrit précédemment, ou plus généralement à tout autre procédé de formation d'un ruban comprenant des éléments de retenue tels que des crochets.

Les différents appareillages et procédés décrits précédemment peuvent être utilisés indépendamment ou en combinaison.

A titre d'exemple, on décrit ci-après en référence à la figure 18 un produit pouvant être obtenu via les appareillages et procédés décrits précédemment.

La figure 18 présente ainsi un produit 300 comprenant un ruban 100 réalisé en matériau plastique, le ruban 100 est formé d'un seul tenant avec un film en matériau élastique 310 par extrusion. Plus particulièrement, le ruban 100 réalisé en matériau plastique est formé d'un seul tenant avec un film en matériau élastique 310 par extrusions simultanées ou successives. On entend ici par « extrusions successives » le fait que le film 310 et/ou le ruban 300 est réalisé dans la continuité de la formation du ruban 300 et/ou du film 310, ou encore sur la même ligne de production.

La figure 18 est une vue en coupe selon un plan perpendiculaire à la direction longitudinale du produit 300 formé.

Le ruban 100 est similaire au ruban tel que décrit précédemment, et comprend une base 51 et des crochets s'étendant de la face supérieure 511 de la base 51.

Le film en matériau élastique 310 a été extrudé simultanément, successivement ou préalablement à l'extrusion du ruban 100 par le moyen de distribution de matière 3, définissant ainsi une liaison entre le ruban 100 et le film 310 selon une de leurs extrémités transversales. La transition entre le film élastique 310 et la base 51 du ruban 100 est ainsi typiquement continue.

Ainsi, le film en matériau élastique 310, la base et les éléments de retenue du ruban 100 en matériau plastique sont réalisés d'un seul tenant et issu d'extrusion. La référence numérique 320 désigne l'interface entre le film en matériau élastique 310 et le ruban 100.

On entend par « d'un seul tenant » le fait que le ruban et le film sont liés uniquement par distributions de matière simultanées ou successives, par exemple par extrusion simultanées ou successives. En d'autres termes, la liaison obtenue est réalisée seulement par diffusion intramoléculaire du ruban vers le film élastique et/ou du film élastique vers le ruban.

Cette interface 320 peut être réalisée selon un plan sensiblement parallèle à la direction longitudinale du produit 300 comme représenté sur la figure 18, ou réaliser un chevauchement entre le film élastique 310 et le ruban 100.

Lorsque les crochets et la base sont formés d'une même matière, on peut constater qu'il y a une continuité de la matière de la base vers les crochets et réciproquement. En d'autres termes la matière formant les crochets et la matière formant la base sont contiguës.

On définit pour le film élastique 310 une face supérieure 311 et une face inférieure 312. Selon l'exemple représenté sur la figure, la face supérieure 311 du film élastique 310 est ici dans le prolongement de la face supérieure 511 de la base 51 du ruban 100. Selon l'exemple représenté sur la figure 18, la face inférieure 312 du film élastique 310 est ici dans le prolongement de la face inférieure 512 de la base 51 du ruban 100.

L'ensemble formé par le film élastique 310 et le ruban 100 constitue ainsi une couche intermédiaire, présentant une face inférieure et une face supérieure.

Comme on le voit sur la figure 18, un substrat 200 est solidarisé à la face inférieure de la couche intermédiaire, c'est-à-dire à la face inférieure 312 du film élastique 310 et à la face inférieure 512 de la base 51 du ruban 100.

Le substrat 200 est par exemple un matériau non tissé, comme décrit précédemment.

Le substrat 200 est solidarisé à la couche intermédiaire par encapsulation partielle dans ladite couche intermédiaire, c'est-à-dire par encapsulation partielle du substrat dans la base 51 du ruban 100 et dans le film élastique 310. Cette solidarisation est réalisée via le procédé et l'appareillage déjà décrits précédemment en référence aux figures 15 à 17.

Le produit 300 tel que présenté comprend également une couche support 330 solidarisée sur la face supérieure de la couche intermédiaire. Cette couche support 330 s'étend sur la face supérieure 311 du film élastique 310, et également au moins partiellement sur la face supérieure 511 de la base 51 du ruban 100.

La couche support 330 peut être de composition identique au substrat 200, ou d'une composition distincte ; il peut par exemple s'agir d'une couche de matériau non tissé, d'un tricot ou d'une grille.

Dans l'exemple représenté, la couche support 330 est solidarisée sur la face supérieure de la couche intermédiaire par collage. On représente ainsi schématiquement sur la figure 18 une couche de colle 340 s'étendant sur la face supérieure 311 du film élastique 310 et également partiellement sur la face supérieure 511 de la base 51 du ruban 100.

La couche support 330 est alors typiquement solidarisée sur la face supérieure de la couche intermédiaire après solidarisation du substrat 200 à la face inférieure de la couche intermédiaire.

On comprend bien que ce mode de solidarisation est uniquement illustratif, et que toute autre méthode adaptée peut être employée pour solidariser la couche support 330 sur la face supérieure de la couche intermédiaire.

La couche support 330 peut par exemple être disposée sur la bande de moulage 1 préalablement à la distribution de matière par le moyen de distribution de matière 3, de sorte que la matière plastique et élastique soit injectée sur la bande de moulage alors que la couche support 330 est positionnée sur la bande de moulage 1, comme mentionné précédemment.

La face supérieure et/ou la face inférieure de la base 51 du ruban 100 et/ou du film élastique 310 peuvent être lisses (à l'exception des crochets) ou non. Elles peuvent par exemple présenter des éléments en relief, par exemple des éléments de transition, des crochets supprimés, en creux comme de trous, des fentes, ou des saillies tels que des picots, des pointes, des dômes et/ou des pics. Ces éléments à reliefs peuvent présenter une hauteur qui est inférieure à la hauteur des éléments de retenue, plus particulièrement inférieure à 40% de la hauteur des éléments de retenue, en particulier, inférieure à 25% de la hauteur des éléments de retenue. De tels éléments en relief peuvent être avantageux dans certaines applications, par exemple pour définir des zones ayant une rugosité distincte ou un aspect de surface différent portant des avantages pratiques et/ou esthétiques.

Dans le cas où le substrat 200 et/ou la couche support 330 est un non tissé, le substrat 200 et/ou la couche support 330 peut être activé préalablement à sa solidarisation à la couche intermédiaire, comme indiqué précédemment.

On entend par matériau plastique un matériau thermoplastique, plus particulièrement un matériau polyoléfine à base de d'homopolymère ou de copolymère.

A titre d'exemple, la liste de matière plastique : LLDPE (Linear Low Density PolyEthylène ou polyéthylène linéaire de faible densité), LDPE (Low Density PolyEthylène ou polyéthylène de faible densité), m-PE (Métallocène PolyEthylène), HDPE (High Density PolyEthylène ou polyéthylène de haute densité), EVA (Éthylène Acétate de Vinyle) et PP (PolyPropylène), comprenant une distribution de poids moléculaire monomodale ou multimodale (par exemple bimodale), en particulier une composition comprenant du LLDPE et d'un plastomère, notamment d'un plastomère base polyéthylène. On pourrait également utiliser du polyamide (PA), de l'acide polyactique (PLA), du polyhydroxyalcanoates (PHA), PVOH, PBS.

On entend par matériau élastique un matériau adapté à être étiré sous l'effet d'une force d'étirement exercée dans la direction latérale et à reprendre sensiblement sa forme et ses dimensions initiales après relâchement de ladite force d'étirement. Il s'agit par exemple d'un matériau qui conserve une déformation résiduelle ou rémanence après élongation et relâchement (déformation résiduelle aussi appelée « permanent set » ou « SET ») inférieure à 30%, ou encore, inférieure à 20%, ou par exemple inférieure à 5 %, de sa dimension initiale (avant élongation) pour un allongement de 100 % de sa dimension initiale, à température ambiante (23°C). Le SET pourra être mesuré comme indiqué dans la demande de brevet EP1783257, dont le contenu est incorporé par référence, et notamment les paragraphes [0056] à [0062] de la publication EP1783257A1 qui détaillent un exemple de mesure du SET.

A titre d'exemple de matières élastiques, on peut citer: les copolymères styrène/isoprène (SI), styrène/isoprène/styrène (SIS), styrène/butadiène/styrène (SBS), styrène-éthylène/butylène-styrène (SEBS), styrène-éthylène/propylène-styrène (SEPS) ou SIBS. Des mélanges de ces élastomères les uns avec les autres ou avec des non élastomères modifiant certaines caractéristiques autres que l'élasticité peuvent également être pris en compte. Par exemple jusqu'a 50 percent en poids mais, de préférence, moins de 30 percent en poids de polymère peuvent être ajoutés afin de modifier certaines caractéristiques des matériaux de base (élasticité, tenue a la chaleur, procéssabilité, tenue aux UV, colorant,...), tels que des polyvinyles styrène, des polystyrènes ou des poly a-méthyl-styrène, polyesters époxy, polyoléfines, par exemple des polyéthylènes ou certains acétates d'éthylène/vinyle, de préférence ceux de poids moléculaire élevé.

Le matériau élastique peut être, notamment, un styrène-isoprène-styrène, disponible par exemple auprès de la Société Kraton Polymers, sous la dénomination KRATON D (Marque déposée), ou de la société DEXCO POLYMERS LP sous la dénomination VECTOR SBC 4211 (Marque déposée). On peut également utiliser les matériaux TPE (ThermoPlastic Elastomère), en particulier un élastomère thermoplastique de polyuréthane, notamment le PELLETHANE (Marque déposée) 2102-75A de la Société The Dow Chemical Company. On peut utiliser également un styrène-butadiène-styrène, notamment le KRATON D-2122 (Marque déposée) de la société Kraton Polymers, ou le VECTOR SBC 4461 (Marque déposée) de la société Dexco Polymers LP. On peut aussi utiliser un styrène-éthylène/butylène, notamment le KRATON G-2832 (Marque déposée) de la société Kraton Polymers, ou un copolymère séquence styrène-éthylène-butylène-styrène (SEBS), notamment le KRATON (Marque déposée) G2703. On peut également utiliser un copolymère d'acrylate d'isooctyle et d'acide acrylique suivant des rapports de monomère de 90/10. On peut également utiliser un copolymère séquence polyamide polyester PEBAX (Marque déposée) 2533 de la société Arkema.

D'autres matériaux possibles sont des polymères polyoléfines, principalement des copolymères d'éthylène et/ou propylène, ayant des caractéristiques des élastomères, notamment issus de la catalyse métallocène, tel le VISTAMAXX VM-1120 (Marque déposée), disponible auprès de la société Exxon Mobil Chemical ou encore des polymères chargés avec du caoutchouc, comme par exemple le Santoprène chargé avec de l'EPDM.

On pourra également utiliser des matériaux de sorte à favoriser la liaison entre le matériau plastique et le matériau élastique. En variante de réalisation, on pourrait envisager que les cavités de la bande de moulage comportent chacune une tige qui s'étend entre la face supérieure et la face inférieure de la bande de moulage, de l'une à l'autre de ces faces.

Différents systèmes et méthodes compatibles avec le présent exposé sont décrits dans les demandes de brevets FR 16 53866, FR 16 53870, FR 16 53872, FR 16 53873, FR 16 53888, FR 16 53894 et FR 16 53897.

## Revendications

1. Procédé de formation d'un dispositif de retenue à crochets, dans lequel :
- on fournit une bande de moulage (1) présentant une face interne (11) et une face externe (12), et comprenant une pluralité de cavités (13), chaque cavité (13) définissant une tige (14) s'étendant de la face externe (12) vers la face interne (11), et comprenant une extrémité formant une tête (15) s'étendant à partir de la tige (14) vers la face interne (11) de la bande de moulage (1),
- on positionne la bande de moulage (1) sur des moyens d'entrainement en rotation (2), la face interne (11) de la bande de moulage (1) étant disposée en appui contre les moyens d'entrainement (2),
- on distribue un matériau de moulage sur la face externe (12) de la bande de moulage (1) par un moyen de distribution de la matière (3) disposé en regard de la bande de moulage (1) de manière à définir un entrefer entre le moyen de distribution de la matière (3) et la bande de moulage (1), l'étape de distribution du matériau de moulage étant réalisée de manière à remplir ledit entrefer et les cavités (13) de matériau de moulage afin de former un ruban (100) comprenant une base (51) dont l'épaisseur est définie par l'entrefer, et des premières préformes faisant saillie de ladite base (51) comprenant une tige (52) et une tête (53), les premières préformes étant formées par la matière plastique dans les cavités (13) de la bande de moulage (1),
- on démoule le ruban (100),
- on introduit le ruban (100) démoulé
dans un dispositif de formage (7) de manière à modifier la forme de la tête (53) des préformes par formage, **caractérisé en ce que** le dispositif de formage (7) comprend au moins deux éléments tournants (72, 73), lesdits éléments tournants ayant chacun des vitesses distinctes par rapport à la vitesse d'entrainement du ruban.

2. Procédé selon la revendication 1, dans lequel ladite modification de la forme de la tête (53) des préformes par formage réalisant au moins une déformation d'une partie de la tête (53) de chacune des préformes, ladite au moins une déformation tendant pour chaque préforme, à déformer une des extrémités de la tête (53) de la préforme de manière à former une nervure (81, 82) de la face supérieure de la tête (53) de la préforme.

3. Procédé selon l'une des revendications 1 ou 2, dans lequel lors de l'étape de démoulage du ruban (100), on déforme de manière plastique les premières préformes de manière à obtenir des deuxièmes préformes dont la forme se distingue des premières préformes, lesdites secondes préformes étant ensuite déformées par le dispositif de formage (7).

4. Procédé selon l'une des revendications 1 à 3, dans lequel le matériau de moulage est du polypropylène, et dans lequel lors de l'étape de formage, au moins un élément de formage (72, 73) du dispositif de formage est maintenu à une température comprise entre 75 et 165 °C, en particulier avoisinant les 120°C.

5. Procédé selon la revendication 3, dans lequel l'étape de démoulage du ruban (100) et des premières préformes entraine un changement de hauteur de la tête (52) et/ou de la tige (53), et/ou un changement de largeur de la tête (52) et/ou de la tige (53).

6. Procédé selon l'une des revendications 3 à 5, dans lequel le dispositif de formage (7) comprend un élément à température ambiante, et au moins un élément à une température strictement comprise entre la température de fléchissement sous charge (HDT Heat deflection temperature) et la température de fusion du matériau de moulage.

7. Procédé selon la revendication 3 ou selon la revendication 3 prise en combinaison avec l'une des revendications 4 à 6, dans lequel l'étape de formage réalise au moins une déformation d'une partie de la tête (53) de chacune des deuxièmes préformes, ladite au moins une déformation tendant pour chaque préforme, à déformer une des extrémités de la tête (53) de la préforme de manière à former une nervure (81, 82) de la face supérieure de la tête (53) de la préforme.

8. Procédé selon l'une des revendications 1 à 7, dans lequel lors de l'étape de distribution du matériau de moulage, l'entrefer entre le moyen de distribution de matière (3) et la bande de moulage (1) est compris entre 10 micromètres et 700 micromètres, plus particulièrement entre 10 et 500 micromètres, ou plus précisément entre 50 et 100 micromètres.

9. Procédé selon la revendication 8, dans lequel le matériau de moulage est du polypropylène, et que l'étape de distribution du matériau de moulage est réalisée à une pression comprise entre 30 et 50 bars, et à une température comprise entre 150 et 300 °C.

10. Procédé selon l'une des revendications 1 à 9, dans lequel l'étape de démoulage est réalisée lorsque la base (51) du ruban (100) est à une température inférieure à la température de fusion du matériau de moulage, ou inférieure à la température de fléchissement sous charge du matériau de moulage.

11. Procédé selon l'une des revendications 1 à 10, dans lequel préalablement à l'étape de démoulage, on applique une couche de matériau non tissé (200) contre la face inférieure (512) de la base (51) avant solidification de ladite face inférieure (512) de la base (51), de manière à faire pénétrer au moins partiellement des portions de fibres et/ ou filaments de la couche de matériau non-tissé (200) dans la base (51).

12. Procédé selon la revendication 11, dans lequel lors de l'étape d'application du matériau non tissé (200) contre la face inférieure (512) de la base (51), la couche de matériau non tissé (200) est à température ambiante, et la température de la base (51) résulte uniquement de l'étape de formation du ruban (100).

13. Appareillage pour la mise en œuvre d'un procédé selon l'une des revendications 1 à 12, comprenant :
- un dispositif de moulage, comprenant une bande de moulage (1) montée sur des moyens d'entrainement en rotation (2), la bande de moulage (1) comprenant une face interne (11) et une face externe (12), la face interne (11) étant montée en appui contre les moyens d'entrainement en rotation (2), la bande de moulage (1) comprenant une pluralité de cavités (13), chaque cavité (13) définissant une tige (14) s'étendant de la face externe (12) vers la face interne (11), et comprenant une extrémité formant une tête (15) s'étendant à partir de la tige (14) vers la face interne (11) de la bande de moulage (1),
- un moyen de distribution de matière (3) disposée en regard du dispositif de moulage (1, 2), configuré de manière à distribuer de la matière de moulage en un point de la bande de moulage (1), de manière à former un ruban (100) de préformes comprenant une base (51) dont l'épaisseur est définie par l'entrefer, et des premières préformes faisant saillie de ladite base (51) comprenant une tige (52) et une tête (53),
- des moyens de démoulage (6), configurés pour démouler un ruban (100) de préformes formées dans la bande de moulage (1),
- un dispositif de formage (7), configurés de manière à modifier la tête (53) des préformes par formage.

14. Appareillage selon la revendication 13, dans lequel ledit dispositif de formage (7) est configuré de manière à réaliser au moins une déformation d'une partie de la tête (53) de chacune des préformes, ladite au moins une déformation tendant pour chaque préforme, à déformer une des extrémités de la tête (53) de la préforme de manière à former une nervure (81, 82) de la face supérieure de la tête (53) de la préforme.

15. Appareillage selon l'une des revendications 13 ou 14, comprenant en outre des moyens d'entrainement (9) d'une couche de matériau non tissé (200), adaptés pour appliquer un matériau non tissé (200) contre la face inférieure (512) de la base (51) du ruban (100) d'éléments de retenue en aval du moyen de distribution de matière (3).

## Patentansprüche

1. Verfahren zum Bilden einer Hakenhaltevorrichtung, wobei:
- ein Formband (1) bereitgestellt wird, das eine Innenseite (11) und eine Außenseite (12) aufweist und umfassend eine Vielzahl von Hohlräumen (13), jeder Hohlraum (13) einen Schaft (14) definiert, der sich von der Außenseite (12) zu der Innenseite (11) erstreckt, und umfassend ein einen Kopf (15) bildendes Ende, das sich von dem Schaft (14) zu der Innenseite (11) des Formbands (1) erstreckt,
- das Formband (1) auf Drehantriebseinrichtungen (2) positioniert wird, die Innenseite (11) des Formbands (1) anliegend an den Antriebseinrichtungen (2) angeordnet ist,
- durch eine Materialverteilungseinrichtung (3), die gegenüber dem Formband (1) angeordnet ist, ein Formmaterial auf der Außenseite (12) des Formbands (1) verteilt wird, um einen Luftspalt zwischen der Materialverteilungseinrichtung (3) und dem Formband (1) zu definieren, wobei der Schritt eines Verteilens des Formmaterials durchgeführt wird, um den Spalt und die Hohlräume (13) mit Formmaterial zu füllen, um ein Band (100) zu bilden, umfassend eine Basis (51), deren Stärke durch den Spalt definiert ist, und erste Vorformlinge, die von der Basis (51) hervorstehen, umfassend einen Schaft (52) und einen Kopf (53), wobei die ersten Vorformlinge durch das Kunststoffmaterial in den Hohlräumen (13) des Formbands (1) gebildet werden,
- das Band (100) entformt wird,
- das entformte Band (100) in eine Formgebungsvorrichtung (7) eingeführt wird, um die Form des Kopfs (53) der Vorformlinge durch Formgebung zu verändern, **dadurch gekennzeichnet, dass** die Formgebungsvorrichtung (7) mindestens zwei drehende Elemente (72, 73) umfasst, wobei die drehenden Elemente jeweils unterschiedliche Geschwindigkeiten in Bezug auf die Antriebsgeschwindigkeit des Bands aufweisen.

2. Verfahren nach Anspruch 1, wobei die Änderung der Form des Kopfs (53) der Vorformlinge durch Formgebung mindestens eine Verformung eines Teils des Kopfs (53) von jedem der Vorformlinge bewirkt, wobei die mindestens eine Verformung für jeden Vorformling dazu neigt, eines der Enden des Kopfs (53) des Vorformlings zu verformen, um eine Rippe (81, 82) der oberen Fläche des Kopfs (53) des Vorformlings zu bilden.

3. Verfahren nach einem der Ansprüche 1 oder 2, wobei bei dem Schritt eines Entformens des Bands (100) die ersten Vorformlinge plastisch verformt werden, um zweite Vorformlinge zu erlangen, deren Form sich von den ersten Vorformlingen unterscheidet, wobei die zweiten Vorformlinge anschließend durch die Formgebungsvorrichtung (7) verformt werden.

4. Verfahren nach einem der Ansprüche 1 bis 3, wobei das Formmaterial Polypropylen ist, und wobei bei dem Formgebungsschritt mindestens ein Formelement (72, 73) der Formgebungsvorrichtung auf einer Temperatur zwischen 75 und 165 °C, insbesondere in der Nähe von 120 °C, gehalten wird.

5. Verfahren nach Anspruch 3, wobei der Schritt eines Entformens des Bands (100) und der ersten Vorformlinge eine Änderung der Höhe des Kopfs (52) und/oder des Schafts (53) und/oder eine Änderung der Breite des Kopfs (52) und/oder des Schafts (53) bewirkt.

6. Verfahren nach einem der Ansprüche 3 bis 5, wobei die Formgebungsvorrichtung (7) ein Element bei Raumtemperatur und mindestens ein Element bei einer Temperatur umfasst, die strikt zwischen der Wärmeformbeständigkeitstemperatur, HDT, und der Schmelztemperatur des Formgebungsmaterials ist.

7. Verfahren nach Anspruch 3 oder nach Anspruch 3 in Kombination mit einem der Ansprüche 4 bis 6, wobei der Schritt eines Formgebens mindestens eine Verformung eines Teils des Kopfs (53) von jedem der zweiten Vorformlinge durchführt, wobei die mindestens eine Verformung für jeden Vorformling dazu neigt, eines der Enden des Kopfs (53) des Vorformlings zu verformen, um eine Rippe (81, 82) der oberen Fläche des Kopfs (53) des Vorformlings zu bilden.

8. Verfahren nach einem der Ansprüche 1 bis 7, wobei beim Schritt eines Verteilens des Formmaterials der Luftspalt zwischen der Materialverteilungseinrichtung (3) und dem Formband (1) zwischen 10 Mikrometern und 700 Mikrometern, insbesondere zwischen 10 und 500 Mikrometern, oder genauer zwischen 50 und 100 Mikrometern, liegt.

9. Verfahren nach Anspruch 8, wobei das Formmaterial Polypropylen ist, und dass der Schritt des eines Verteilens des Formmaterials bei einem Druck zwischen 30 und 50 bar und einer Temperatur zwischen 150 und 300 °C durchgeführt wird.

10. Verfahren nach einem der Ansprüche 1 bis 9, wobei der Schritt eines Entformens durchgeführt wird, wenn die Basis (51) des Bands (100) auf einer Temperatur unterhalb der Schmelztemperatur des Formmaterials oder unterhalb der Wärmeformbeständigkeitstemperatur des Formmaterials ist.

11. Verfahren nach einem der Ansprüche 1 bis 10, wobei vor dem Schritt eines Entformens eine Schicht aus Vliesmaterial (200) an der Unterseite (512) der Basis (51) vor dem Verfestigen der Unterseite (512) der Basis (51) aufgebracht wird, um zumindest teilweise Teile von Fasern und/oder Filamenten der Schicht aus Vliesmaterial (200) in die Basis (51) eindringen zu lassen.

12. Verfahren nach Anspruch 11, wobei bei dem Schritt eines Aufbringens des Vliesmaterial (200) an der Unterseite (512) der Basis (51) aufgebracht wird, die Schicht aus Vliesstoffmaterial (200) auf Raumtemperatur ist und die Temperatur der Basis (51) nur aus dem Schritt eines Bildens des Bands (100) resultiert.

13. Vorrichtung zum Implementieren eines Verfahrens nach einem der Ansprüche 1 bis 12, umfassend
- eine Formvorrichtung, umfassend ein Formband (1), das auf Drehantriebseinrichtungen (2) montiert ist, das Formband (1) umfassend eine Innenseite (11) und eine Außenseite (12), wobei die Innenseite (11) in Anlage an den Drehantriebseinrichtungen (2) montiert ist, das Formband (1) umfassend eine Vielzahl von Hohlräumen (13), wobei jeder Hohlraum (13) einen Schaft (14) definiert, der sich von der Außenseite (12) zu der Innenseite (11) erstreckt, und umfassend ein einen Kopf (15) bildendes Ende, das sich von dem Schaft (14) zu der Innenseite (11) des Formbands (1) erstreckt,
- eine Materialverteilungseinrichtung (3), die gegenüber der Formvorrichtung (1, 2) angeordnet und konfiguriert ist, um Formmaterial an einem Punkt des Formbands (1) zu verteilen, um ein Band (100) aus Vorformlingen zu bilden, umfassend eine Basis (51), deren Stärke durch den Luftspalt definiert ist, und erste Vorformlinge, die von der Basis (51) hervorstehen, umfassend einen Schaft (52) und einen Kopf (53),
- Entformungseinrichtungen (6), die konfiguriert sind, um ein Band (100) aus Vorformlingen zu entformen, die in dem Formband (1) gebildet sind,
- eine Formgebungsvorrichtung (7), die konfiguriert ist, um den Kopf (53) der Vorformlinge durch Formgebung zu verändern.

14. Gerät nach Anspruch 13, wobei die Formgebungsvorrichtung (7) konfiguriert ist, um mindestens eine Verformung eines Teils des Kopfs (53) von jedem der Vorformlinge durchzuführen, wobei die mindestens eine Verformung für jeden Vorformling dazu neigt, eines der Enden des Kopfs (53) des Vorformlings zu verformen, um eine Rippe (81, 82) der oberen Fläche des Kopfs (53) des Vorformlings zu bilden.

15. Gerät nach einem der Ansprüche 13 oder 14, ferner umfassend Antriebseinrichtungen (9) einer Schicht aus Vliesmaterial (200), die angepasst sind, um ein Vliesmaterial (200) an der Unterseite (512) der Basis (51) des Bands (100) aus Halteelementen stromabwärts von den Materialverteilungseinrichtungen (3) aufzubringen.

## Claims

1. A method of forming a retaining device with hooks, wherein:
· a molding strip (1) is provided that presents an inside face (11) and an outside face (12), and that has a plurality of cavities (13), each cavity (13) defining a stem (14) extending from the outside face (12) towards the inside face (11) and including an end forming a head (15) that extends from the stem (14) towards the inside face (11) of the molding strip (1);
· the molding strip (1) is positioned on rotary drive means (2), the inside face (11) of the molding strip (1) being arranged to bear against the drive means (2) ;
· molding material is dispensed against the outside face (12) of the molding strip (1) by material dispenser means (3) arranged facing the molding strip (1) in such a manner as to define a gap between the material dispenser means (3) and the molding strip (1), the step of dispensing the molding material being performed in such a manner as to fill said gap and the cavities (13) with molding material so as to form a tape (100) comprising a base (51) of thickness that is defined by the gap, and first preforms projecting from said base (51) each comprising a stem (52) and a head (53), the first preforms being formed by the plastics material in the cavities (13) of the molding strip (1);
· the tape (100) is unmolded; and
· the unmolded tape (100) is inserted in a forming device (7) so as to modify the shapes of the heads (53) of the preforms by forming,
**characterized in that** the forming device (7) comprises at least two rotary elements (72, 73), each of said rotary elements having a speed that is different from the drive speed of the tape.

2. A method according to claim 1, wherein said modification of the shapes of the heads (53) of the preforms by forming produces at least one deformation of a portion of the head (53) of each of the preforms, said at least one deformation tending, for each preform, to deform one of the ends of the head (53) of the preform so as to form a rib (81, 82) on the top face of the head (53) of the preform.

3. A method according to either claim 1 or claim 2, wherein during the step of unmolding the tape (100), the first preforms are deformed plastically so as to obtain second preforms of shape that is different from the shape of the first preforms, said second preforms subsequently being deformed by the forming device (7).

4. A method according to any one of claims 1 to 3, wherein the molding material is polypropylene, and wherein during the forming step, at least one forming element (72, 73) of the forming device is maintained at a temperature lying in the range 75°C to 165°C, and in particular close to 120°C.

5. A method according to claim 3, wherein the step of unmolding the tape (100) and the first preforms leads to a change in the height of the head (52) and/or of the stem (53), and/or to a change in the width of the head (52) and/or of the stem (53).

6. A method according to any one of claims 3 to 5, wherein the forming device (7) comprises an element at ambient temperature, and at least one element at a temperature that lies strictly between the heat deflection temperature (HDT) and the melting temperature of the molding material.

7. A method according to claim 3 or according to claim 3 taken in combination with any one of claims 4 to 6, wherein the forming step produces at least one deformation of a portion of the head (53) of each of the second preforms, said at least one deformation tending, for each preform, to deform one of the ends of the head (53) of the preform so as to form a rib (81, 82) on the top face of the head (53) of the preform.

8. A method according to any one of claims 1 to 7, wherein during the step of dispensing the molding material, the gap between the material dispenser means (3) and the molding strip (1) lies in the range 10 µm to 700 µm, more particularly in the range 10 µm to 500 µm, or more precisely in the range 50 µm to 100 µm.

9. A method according to claim 8, wherein the molding material is polypropylene, and the step of dispensing the molding material is performed at a pressure lying in the range 30 bar to 50 bar, and at a temperature lying in the range 150°C to 300°C.

10. A method according to any one of claims 1 to 9, wherein the unmolding step is performed while the base (51) of the tape (100) is at a temperature lower than the melting temperature of the molding material, or lower than the heat deflection temperature of the molding material.

11. A method according to any one of claims 1 to 10, wherein prior to the unmolding step, a layer of nonwoven material (200) is applied against the bottom face (512) of the base (51) before said bottom face (512) of the base (51) has solidified so as to cause portions of the fibers and/or filaments of the layer of nonwoven material (200) to penetrate into the base (51), at least in part.

12. A method according to claim 11, wherein during the step of applying the nonwoven material (200) against the bottom face (512) of the base (51), the layer of nonwoven material (200) is at ambient temperature, and the temperature of the base (51) is the result only of the step of forming the tape (100).

13. Apparatus for performing a method according to any one of claims 1 to 12, comprising:
• a molding device, comprising a molding strip (1) mounted on rotary drive means (2), the molding strip (1) having an inside face (11) and an outside face (12), the inside face (11) being mounted to bear against the rotary drive means (2), the molding strip (1) having a plurality of cavities (13), each cavity (13) defining a stem (14) extending from the outside face (12) towards the inside face (11), and including an end forming a head (15) that extends from the stem (14) towards the inside face (11) of the molding strip (1);
• material dispenser means (3) arranged facing the molding device (1,2), and configured in such a manner as to dispense molding material at a point of the molding strip (1) so as to form a tape (100) of preforms having a base of thickness (51) defined by the gap, and first preforms each comprising a stem (52) and a head (53) projecting from said base (51);
• unmolding means (6) configured to unmold the tape (100) of preforms formed in the molding strip (1); and
• a forming device (7), configured to modify the heads (53) of the preforms by forming.

14. Apparatus according to claim 13, wherein said forming device (7) is configured so as to produce at least one deformation of a portion of the head (53) of each of the preforms, said at least one deformation tending, for each preform, to deform one of the ends of the head (53) of the preform so as to form a rib (81, 82) on the top face of the head (53) of the preform.

15. Apparatus according to claim 13 or claim 14, further comprising drive means (9) for driving a layer of nonwoven material (200) and adapted to press a nonwoven material (200) against the bottom face (512) of the base (51) of the tape (100) of retaining elements downstream from the material dispenser means (3).
